(19) **Europäisches Patentamt / European Patent Office / Office européen des brevets**

(11) **EP 3 290 217 A1**

(12) **EUROPEAN PATENT APPLICATION**
published in accordance with Art. 153(4) EPC

(43) Date of publication:
07.03.2018 Bulletin 2018/10

(21) Application number: 16786444.6

(22) Date of filing: 25.04.2016

(51) Int Cl.:
*B41M 5/00* (2006.01)          *B41M 5/50* (2006.01)
*B41M 5/52* (2006.01)          *C09D 11/30* (2014.01)
*G10K 11/16* (2006.01)         *G10K 11/162* (2006.01)
*E04B 1/86* (2006.01)

(86) International application number:
**PCT/JP2016/062914**

(87) International publication number:
**WO 2016/175167 (03.11.2016 Gazette 2016/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 30.04.2015 JP 2015093301

(71) Applicant: **Riso Kagaku Corporation**
**Tokyo 108-8385 (JP)**

(72) Inventors:
• **ARAI, Sayako**
**Tsukuba-shi**
**Ibaraki 305-0818 (JP)**
• **YAMAMOTO, Hirotaka**
**Tsukuba-shi**
**Ibaraki 305-0818 (JP)**

(74) Representative: **Schön, Christoph**
**Dr. Schön, Neymeyr & Partner mbB**
**Bavariaring 26**
**80336 München (DE)**

(54) **DECORATIVE ARTICLE AND SURFACE-TREATED ARTICLE**

(57) A decorative article having a printed image provided on the surface of a porous material having at least one function selected from among sound absorption, water absorption and heat insulation, and an amount of non-volatile liquid contained in the decorative article being at least 0.1 g/m$^2$ but not more than 55 g/m$^2$.

EP 3 290 217 A1

**Description**

TECHNICAL FIELD

Embodiments of the present invention relate to a decorative article prepared by decorating the surface of a functional porous material, and a surface-treated article prepared by surface-treating the surface of a porous material.

BACKGROUND

Functional porous materials (hereafter in this specification also referred to as simply "porous materials") are composed of metals, resins or natural materials having a structure containing a multitude of fine pores, and have special properties derived from this porous structure that conventional materials do not possess.

Specifically, because they are porous, functional porous materials are extremely lightweight, and because the pores are interconnected in some way, these materials exhibit breathability (air permeability), permeability or light transmittance. Further, because they can retain air or liquids inside the pores, these materials also have shock absorption, sound absorption, water absorption or energy absorption properties. Moreover, because the specific surface area is large, chemical reactivity and the like at the surface also increases. In addition, porous materials have excellent workability, and can be easily processed by cutting or bending or the like.

Because porous materials combine these types of properties or functions with the other inherent features of the material, they are used in various applications.

For example, examples of porous materials that are used as sound absorption materials include materials obtained by pressing aluminum non-woven fabric, porous materials obtained by sintering aluminum powder, materials obtained by compression molding of resin fibers such as polyester fibers, gypsum board, and materials obtained by molding natural fibers such as glass wool, ceramic materials or wood fibers.

Further, porous materials are also widely used as heat insulation materials. Materials such as glass wool, rock wool, glass cloth or wood fibers may be used, as is, with no modification of the form of the material, or may be subjected to compression molding in a similar manner to sound absorption materials.

Because sound absorption materials and heat insulation materials are widely used in interior finishings for buildings or in speaker covers or the like, they must exhibit not only function, but also superior design aesthetics. Accordingly, a decorative method is required that is capable of forming high-quality images on these porous materials, without destroying or impairing the function the porous materials exhibit as a result of their porous structure.

Examples of these decorative methods include methods of subjecting the surface of the material to three-dimensional processing to generate unevenness or the like, methods of applying color or a pattern to the material by coating or printing, and methods of covering the material with fabric, but in order to better meet the needs of the user and provide a wider range of decorative possibilities, decorative methods that employ on-demand printing are particularly suitable.

A sound absorption panel having an aesthetic design obtained by printing an ink onto the surface of the sound absorption material in a dot-like pattern, and designed so that the sound absorption performance is maintained by the non-printed portions is already known (Patent Document 1).

PRIOR ART DOCUMENTS

PATENT DOCUMENTS

Patent Document 1: JP 2008-285969 A

SUMMARY OF INVENTION

TECHNICAL PROBLEM

However, in the conventional technology described above, because a non-printed region must be provided to expose the sound absorption material, the dot density cannot be increased high. Accordingly, a high-resolution image cannot be printed, meaning the material is still not entirely satisfactory in terms of design aesthetics.

Generally, because of their structure, porous materials have a property of absorbing liquids extremely rapidly. As a result, low-viscosity inks such as inkjet inks tend to immediately permeate into the interior of the porous material upon printing, meaning satisfactory color development cannot be achieved. Inks having a high viscosity such as paints are comparatively less likely to permeate into the interior of the porous material and therefore form a coating more readily, but the type of expressiveness obtainable using digital printing cannot be achieved. In addition, if printing is performed using an ink having an extremely high resin content, such as a screen ink, then there is a possibility that the pores of the porous material may become blocked, resulting in a deterioration in the inherent sound absorption performance of the sound absorption material.

The present invention has an object of providing technology for imparting a functional porous material with superior design aesthetics or decorative properties without impairing the function of the material.

SOLUTION TO PROBLEM

One embodiment of the present invention provides a decorative article having a printed image provided on the surface of a porous material having at least one function selected from among sound absorption, water absorption and heat insulation, and an amount of non-volatile liquid contained in the decorative article being at least 0.1 g/m$^2$ but not more than 55 g/m$^2$.

Another embodiment of the present invention provides a method for producing the decorative article according to the embodiment described above, the method including a step of forming the printed image using an aqueous ink containing water, a water-dispersible resin and/or a water-soluble resin, a colorant, and a non-volatile liquid in an amount of not more than 60% by mass relative to the total mass of the ink.

Another embodiment of the present invention provides a surface-treated article having a surface treatment layer on the surface of a porous material having at least one function selected from among sound absorption, water absorption and heat insulation, and an amount of non-volatile liquid contained in the surface-treated article being not more than 55 g/m$^2$.

Yet another embodiment of the present invention provides a method for producing the surface-treated article according to the embodiment described above, the method including a step of forming the surface treatment layer using a surface treatment liquid containing water, a colorant-fixing agent, and a non-volatile liquid in an amount of not more than 60% by mass relative to the total mass of the surface treatment liquid.

ADVANTAGEOUS EFFECTS OF INVENTION

In the embodiments of the present invention, because the amount of the non-volatile liquid contained in the decorative article or the surface-treated article is limited to not more than a specific amount, a vivid printed image having excellent color development can be formed without impairing the function of the porous material.

DESCRIPTION OF EMBODIMENTS

Embodiments of the present invention are described below in detail, but needless to say, the present invention is in no way limited by these embodiments, and various modifications and alterations are possible. In the present description, the terms "weight" and "mass" are deemed to have the same meaning, and the term "weight" may be used below for the sake of consistency.

In the following description, the term "porous material" is sometimes used to mean "functional porous material", the terms "porous sound absorption material", "porous water absorption material" and "porous heat insulation material" are sometimes simply referred to as "sound absorption material", "water absorption material" or "heat insulation material" respectively, and a "surface treatment liquid" is sometimes simply termed a "treatment liquid".

<Decorative Article>

The decorative article (or the decorated article) according to an embodiment of the present invention has a printed image provided on the surface of a functional porous material (or a functional porous member), in which the amount of non-volatile liquid contained in the decorative article is at least 0.1 g/m$^2$ but not more than 55 g/m$^2$.

In this specification, the "amount of non-volatile liquid" in the decorative article or the surface-treated article described below means the weight of substances (non-volatile liquids) retained within the article in a liquid state at normal temperature following heating of the decorative article or surface-treated article at 90°C for 10 minutes. These non-volatile liquids are described below in further detail, and organic solvents and surfactants can typically be used as the non-volatile liquids.

The functional porous material is a material having a multitude of pores, where these pores exhibit a sound absorption, water absorption or heat insulation function or the like, and therefore if the porous material contains a large amount of liquid, for example derived from ink or the like used during decoration of the material, then there is a possibility that the pores may become blocked, leading to a loss of the inherent function of the material. In this regard, if the amount of the aforementioned non-volatile liquid is 55 g/m$^2$ or less, then despite the presence of this liquid, the function of the porous material is not lost. Further, if the amount of the non-volatile liquid exceeds 55 g/m$^2$, then the rubbing resistance of the printed image tends to deteriorate, and a deterioration in the print density tends to be observed over time, both of which are undesirable. The amount of the aforementioned non-volatile liquid is more preferably, in order of preference, not more than 50 g/m$^2$, not more than 40 g/m$^2$, not more than 35 g/m$^2$, or not more than 30 g/m$^2$, and is most preferably 20 g/m$^2$ or less.

On the other hand, an amount of non-volatile liquid of less than 0.1 g/m$^2$ is also undesirable, because the printed dots formed during decoration do not reach sufficient size, meaning solid images may lack uniformity and the print density may sometimes decrease. Further, in some cases, inclusion of a liquid in the pores may enhance the sound waves absorption effect, whereas including a hydrophilic material such as a water-soluble organic solvent or a surfactant may enhance the water absorption effect, and therefore from these viewpoints, the porous material preferably contains some non-volatile liquid. Accordingly, the amount of non-volatile liquid is preferably at least 0.1 g/m$^2$, and is more preferably 0.3 g/m$^2$ or greater.

The printed image of the decorative article can be formed using an ink, and includes a colorant. In those cases where the ink used in forming the printed image also contains a non-volatile component other than the colorant, for example when the ink contains a water-dispersible resin and/or a water-soluble resin, or a non-volatile liquid, the printed image will also contain this non-volatile component.

The image exists on at least a portion of the porous material, but may also be formed across the entire surface of the material.

In a preferred embodiment, the decorative article may also have a surface treatment layer. In such a case, the ink is fixed to the surface treatment layer, forming an image having superior water rubbing resistance. The entire surface treatment layer need not necessarily be covered by the image. The surface treatment layer can be formed using a surface treatment liquid.

The non-volatile liquid in the decorative article is preferably contained within one of the printed image and the surface treatment layer. In other words, the non-volatile liquid is preferably derived from a component contained in one or both of the ink used for forming the printed image and the surface treatment liquid used for forming the surface treatment layer, but may also be a component that is not derived from the ink or the surface treatment liquid, but is rather applied after the surface treatment or after the decoration. In such a case, a liquid that does not damage the surface-treated surface or the decorative surface, such as a surfactant or a low-polarity water-soluble organic solvent, is preferably used.

<Surface-Treated Article>

The surface-treated article according to an embodiment of the present invention has a surface treatment layer on the surface of a functional porous material, in which the amount of non-volatile liquid contained in the article is not more than 55 g/m$^2$.

When decorating a porous material with an ink, in order to enhance the fixability of the ink to the porous material surface, and enable the formation of an image having superior color development, no bleeding and good durability, the surface of the porous material is preferably first subjected to a surface treatment (pretreatment). During this surface treatment, if a large amount of the solvent of the surface treatment liquid is retained in the porous material, then there is a possibility that pores may become blocked, leading to a loss of the inherent function of the porous material. Further, if the amount of non-volatile liquid in the surface-treated article is too large, then the fixation of the non-volatile liquid to the surface of the article tends to be unsatisfactory, resulting in an undesirable deterioration in the rubbing resistance of the printed image, and bleeding of the image over time may also occur. Accordingly, the amount of non-volatile liquid in the surface-treated article is preferably not more than 55 g/m$^2$, is more preferably, in order of preference, not more than 50 g/m$^2$, not more than 40 g/m$^2$, not more than 35 g/m$^2$, or not more than 30 g/m$^2$, and is most preferably 20 g/m$^2$ or less.

On the other hand, in some cases, inclusion of a liquid in the pores may enhance the sound waves absorption effect, whereas including a hydrophilic material such as a water-soluble organic solvent or a surfactant may enhance the water absorption effect, and therefore the amount of non-volatile liquid in the surface-treated article is preferably at least 0.3 g/m$^2$. Furthermore, even if the surface-treated article contains no non-volatile liquid, by including a non-volatile liquid in the ink used for decoration, the printed dots are able to spread out to an appropriate size, enabling the required level of color development to be obtained, but preferably by including a non-volatile liquid in the surface-treated article, the image formation on the porous material surface using an ink becomes more uniform, and fine text (or characters) and images with fine lines become more distinct. Moreover, by preferably including a non-volatile liquid in the surface-treated article, ink is prevented from accumulating in excessive amounts at the surface of the porous material, and as a result, the rubbing resistance of the printed image can be improved.

The surface-treated article includes a surface treatment layer containing the components from within the surface treatment liquid described below. For example, in those cases where the surface treatment liquid contains a colorant-fixing agent and/or a non-volatile liquid, the surface treatment layer also contains the colorant-fixing agent and/or the non-volatile liquid. Further, when the surface treatment liquid contains another non-volatile component, the surface treatment layer will also contain that non-volatile component.

The surface treatment layer preferably exists on at least a portion of the surface of the porous material, but may also be formed across the entire surface of the porous material.

<Porous Material>

A functional porous material (a functional porous member) is a base material which, as a result of the structure of the porous material, has any of various functions such as humidity control, heat insulation, sound absorption or water absorption. The porous material may also have a plurality of these functions.

The form of the porous material is preferably a sheet-like form, a sheet-like form having surface unevenness, or a form obtained by molding a sheet-like form. In order to ensure satisfactory manifestation of the functions derived from the porous structure, the thickness of the sheet is preferably at least 0.3 mm. These porous materials may be used individually, or a plurality of sheets may be stacked together. Further, laminates formed by combinations with other base materials may also be used.

Porous materials generally have a continuous porous structure, and therefore have breathability. This breathability preferably displays an airflow resistance value of not more than 300 mmH$_2$O. The void ratio of the porous material is preferably from 20% to 95%, and more preferably from 30% to 85%. Here, the void ratio (also known as the porosity) is a weight % value calculated using the following formula.

$$\text{Void ratio (\%)} = (\text{weight of porous material}) \times 100 \, / \, (\text{weight of a base material of the same volume formed from 100\% of the raw material of the porous material})$$

The porous material that constitutes the decorative article and the surface-treated article preferably has at least one function selected from among a sound absorption function, a water absorption function and a heat insulation function, but there are no particular limitations on the porous structure of the material. In other words, the porous material may have porous structure suited to any of the above functions.

A sound absorption material, a water absorption material and a heat insulation material are each described below in further detail.

1. Porous Sound Absorption Material

The sound absorption material is a soundproofing material that exhibits a soundproofing effect by absorbing sound, and is a material having a multitude of pores at the surface and within the interior of the material, with these pores absorbing sound to generate a soundproofing effect. There are no particular limitations on the porous material provided it exhibits this type of function, and examples of materials that may be used include materials formed using glass wool, rock wool, resin fibers and metal fibers and the like, and materials formed from foamed resins, gypsum board, foamed metals and metal powder sintered compacts. Soundproofing materials formed using expanded metals of aluminum or stainless steel or the like may also be used.

The shape of the sound absorption material is typically a board-like or panel-like shape, namely a sheet-like or a plate-like shape but is not restricted to such shapes.

Among the various possibilities, a porous metal body is preferably used as the sound absorption material. A porous metal body is a metal body having a structure containing a multitude of fine pores, and exhibits the type of characteristic properties derived from the porous structure that conventional metals do not possess. In other words, because the material is porous, it is extremely lightweight despite being formed from metal, and because the pores are interconnected in some way, the material exhibits breathability, permeability and light transmittance. Further, because air or liquids can be retained inside the pores, these porous metal bodies also have shock absorption, sound absorption, water absorption and energy absorption properties. Moreover, because the specific surface area is large, chemical reactivity and the like at the surface also increases. In addition, these materials have excellent workability, and can be easily processed by cutting or bending or the like. Porous metal bodies not only exhibit these types of properties, but being metal, also exhibit properties such as high electrical conductivity, high thermal conductivity and superior toughness, and are therefore used in a wide variety of applications.

Examples of porous metal bodies that can be used as sound absorption materials include materials obtained by pressing aluminum non-woven fabric, materials obtained by sintering a metal powder of aluminum, copper, magnesium, titanium, stainless steel, or nickel or the like to form a porous structure, and materials obtained by foaming a molten metal such as aluminum to generate pores and form a porous structure. Unlike conventional sound absorption materials formed from gypsum board, glass wool, polyethylene terephthalate (PET) fibers or ceramic materials, these types of porous metal bodies do not suffer from detachment and scattering of fibers or particles, and can also be easily recycled.

Examples of commercially available products that can be used favorably as the sound absorption material include a metallic sound absorption plate "NDC CALME" (manufactured by NDC Sales Co., Ltd.) produced by sintering aluminum powder, a product "ALTONE" (manufactured by Nichias Corporation) produced by press molding aluminum fibers, a product "POAL" (manufactured by Unix Co., Ltd.) produced by sandwiching an aluminum non-woven fabric between expanded metal sheets and then rolling the structure, a product "FULL POROUS" (manufactured by UACJ Corporation) and a product "Metasily" (manufactured by Thermal Co., Ltd.) produced by continuous sintering of aluminum fibers, a product "Acoustic Mute Board" (manufactured by Acoustic Advance Inc.) produced by compressing polyester fibers, and a product "CARLTON" (manufactured by Nohara Sangyo Co., Ltd.) formed from an ultra-lightweight sheet containing a mixture of glass fibers and pulp.

The product "NDC CALME" mentioned above is a sheet- or plate-like (thickness: about 3 mm) sound absorption material having non-uniform voids of several hundred $\mu$m dispersed throughout the material, and having a void ratio (porosity) of 45%. The product "Acoustic Mute Board" mentioned above is a sheet- or plate-like (thickness: about 5 mm) sound absorption material having a large number of voids mostly having mainly a size of several hundred $\mu$m. The product "CALTON" mentioned above contains glass fiber and pulp as the main raw materials, and has a sheet thickness of 0.7 mm.

The sound absorption performance can be represented by the sound absorption coefficient. The sound absorption coefficient $\alpha$ is the ratio of the energy of the sound not reflected back relative to the energy of the incident sound, and is represented by the following formula.

$$\alpha = (la+lt)/li = (li-lr)/li = 1-lr/li$$

$\alpha$: sound absorption coefficient
li: energy of incident sound (= lr+la+lt)
lr: energy of reflected sound
la: energy of absorbed sound
lt: energy of transmitted sound

There are various types of sound absorption coefficient, including the vertical incidence sound absorption coefficient, random incidence sound absorption coefficient and oblique incidence sound absorption coefficient, but the random incidence sound absorption coefficient prescribed in JIS A 1409 is generally employed, and is measured by the reverberation room method.

Specifically, the sound absorption coefficient at 1,000 Hz for a porous material having a thickness of at least 1 mm, in the case of a back air layer of 100 mm, is preferably at least 0.75, and more preferably 0.85 or greater, and in the case of a porous material having a thickness of less than 1 mm, with a back air layer of 300 mm, is preferably at least 0.55, and more preferably 0.60 or greater.

Further, the sound absorption performance can also be easily evaluated by a permeability measurement. This is a method of evaluating the permeability of fibrous products by the Frazier method as prescribed in ISO-9237, and involves blowing air onto a test piece at a fixed flow rate, and measuring the pressure difference between the front and rear surfaces of the test piece. Specifically, using a Frazier permeability tester (manufactured by Yasuda Seiki Seisakusho, Ltd.), an air stream having a fixed flow rate is blown onto a decorated sound absorption material that represents the test piece at a flow rate of 250 L/minute per 100 cm$^2$ of surface area of the test piece, and a flow speed of 41.7 cm/s, and the pressure difference between the front and rear surfaces of the test piece can be evaluated as the "flow resistance value". When this flow resistance value differs little from that of the undecorated sound absorption material, a determination can be made that the sound absorption coefficient of the sound absorption material against various frequencies has deteriorated little from the undecorated state.

Specifically, the difference in the flow resistance value from that of the undecorated material is preferably less than 30 mmH$_2$O (in other words, an increase of less than 30 mmH$_2$O), and is more preferably less than 20 mmH$_2$O.

2. Porous Water Absorption Material

The water absorption material is a material having the function of absorbing and retaining water, and also functions as a water retention material. A material having fine pores linked together in a three-dimensional network structure is preferred, and this type of structure enables a capillary phenomenon to develop as a result of the vertically and horizontally linked fine pores, meaning superior water absorption performance and water retention performance can be achieved. The void ratio (porosity) is preferably at least 50%, and more preferably at least 70% but not more than about 95%.

The material is preferably a hydrophilic material such as a polyvinyl alcohol (PVA), polyvinyl formal (PVFM), polyethylene glycol, polyacrylate (polyacrylate salt), cellulose, urethane resin, or phenol resin.

One example of a material that can be used is a PVFM sponge, and one such commercial product is "Bellclean" (manufactured by AION Co., Ltd.), which is a porous sheet with a thickness of 1 to 2 mm. This Bellclean is a water absorption material having an average pore size of 80 to 130 $\mu$m, a porosity of about 90%, and a thickness of 2 mm. Further, PVA sponges such as the "kitchen cloth that does not lose water absorbing power" and the "water absorbent sponge cloth that cleans kitchens" (manufactured by AION Co., Ltd.) may also be used favorably. Moreover, the use of cellulose sponges is also desirable. Examples of commercially available products that can be used include "Sponge Cloth" (manufactured by Kalle GmbH). A sample of this "sponge cloth" with dimensions of 30 $\times$ 20 cm is able to absorb about 400 cc of water.

The water absorption performance can be judged on the basis of the time required to absorb a fixed amount of water. For example, when one drop (about 0.04 ml) of water is dripped onto the porous material, the absorption time is preferably within one second, and more preferably within 0.5 seconds.

3. Porous Heat Insulation Material

The heat insulation material is a material that has heat insulation properties, and is typically installed in environmental conditions between the external atmosphere and an inside space. Heat insulation materials are typically used in normal temperature ranges.

Heat insulation materials formed from fibrous materials are classified into artificial mineral fiber-based materials and organic fiber-based materials, and both these types of materials are aggregates of long fibers, with the fine air layers that are formed between the fibers providing heat insulation performance. Specific examples include glass wool heat insulation materials, rock wool heat insulation materials, and other insulating fiber heat insulation materials.

Foamed plastic heat insulation materials exhibit heat insulation performance as a result of air or gas entering the fine cells formed by foaming a resin. Examples include polystyrene foam heat insulation materials and polyethylene foam heat insulation materials formed by a beads method or an extrusion method.

An example of a commercially available product that can be used favorably as a heat insulation material is "Paraboard" (manufactured by Paramount Glass Mfg. Co., Ltd.). This product "Paraboard" is a board-like product formed from high-density glass wool.

The thermal conductivity can be used as an indicator of the performance of the heat insulation material. If the thermal conductivity is high, then this indicates a low thermal resistance value, and inferior heat insulation performance. Measurement of the thermal conductivity may be performed using a guarded hot plate thermal conductivity tester, with measurement performed at an average temperature of 70°C using the guarded hot plate method prescribed in JIS A 1420 (1999).

For the heat insulation performance, the value prescribed in JIS A 1420:1999 (average temperature: 70°C) is preferably not more than 0.10 W/(m·K), and is more preferably 0.05 W/(m·K) or less.

The porous material described above may be subjected to an arbitrary undercoat treatment or hydrophilization treatment prior to the surface treatment described below. In such a case, the coating is preferably performed using an aqueous coating material. Further, the undercoat treatment must be of a level that does not degrade the inherent function of the functional porous material.

<Aqueous Ink>

There are no particular limitations on the ink used in decorating the porous material surface, and the ink may be an oil-based ink, an aqueous ink, or an emulsion ink or the like. In one preferred embodiment, the ink is an aqueous ink containing a colorant, and containing water as a solvent. In this specification, the term "decorate" has the same meaning as "adorn", and means to form a printed image. Similarly, "decorated" or "decorative" means to have a printed image. This decorative portion may cover the entire surface of, or only a portion of, the porous material that represents the target material.

As described above, by forming the printed image while ensuring that the amount of non-volatile liquid in the decorative article satisfies the preferred range described above, a vivid image can be formed on the porous material surface with a small amount of colorant and with no loss of the function of the porous material, for example with the level of function maintained at a similar level to that prior to decoration, even when the printing area for the image covers the entire surface of the porous material. In this manner, because there are no restrictions on the recording surface area of the image, various manners of patterns and text can be produced with complete freedom.

There are no particular limitations on the ink application method used, and any one of inkjet printing, offset printing, screen printing, or flexographic printing or the like may be used. Among them, inkjet printing is preferable, as it enables image formation to be performed on-demand, in a simple and free manner, and therefore the ink is preferably an inkjet ink that is suitable for inkjet printing.

1. Water

There are no particular limitations on the water, provided it can function as a solvent, namely a vehicle, for the ink, and tap water, ion-exchanged water, or deionized water or the like can be used. Water is a highly volatile solvent, and readily volatilizes following discharge onto the porous material, and therefore blocking of the pores of the porous material following printing can be prevented, and deterioration in the performance of the porous material following printing can also be prevented. Further, water is also non-toxic and extremely safe, and does not have the problems associated with VOCs and the like, meaning the decorated porous material is very environmentally friendly.

The water content is preferably at least 25% by weight, more preferably at least 30% by weight, even more preferably at least 50% by weight, and most preferably 65% by weight or more, of the total weight of the ink. Further, the water content is preferably not more than 85% by weight, and more preferably 80% by weight or less.

2. Colorant

Both pigments and dyes can be used as the colorant, and the pigments and dyes may be used separately, or the two may be combined. From the viewpoints of the weather resistance and the print density of the decorative image (decorated image), a pigment is preferably used as the colorant.

The amount of the colorant is preferably within a range from 0.01 to 20% by weight relative to the total weight of the ink. Further, the amount of the colorant is more preferably at least 0.1% by weight, even more preferably at least 0.5% by weight, and most preferably 1% by weight or greater, and is more preferably not more than 15% by weight, even more preferably not more than 10% by weight, and most preferably 8% by weight or less.

Any of the dyes typically used in the technical field of printing may be used without any particular limitations. Specific examples include basic dyes, acid dyes, direct dyes, soluble vat dyes, acid mordant dyes, mordant dyes, reactive dyes, vat dyes and sulfide dyes, and among these, water-soluble dyes and dyes that become soluble upon reduction or the like can preferably be used. More specific examples of dyes that may be used include azo dyes, rhodamine dyes, methine dyes, azomethine dyes, xanthene dyes, quinone dyes, triphenylmethane dyes, diphenylmethane dyes, and methylene blue. These dyes may be used individually, or a combination of two or more dyes may be used.

Examples of pigments that may be used include organic pigments such as azo pigments, phthalocyanine pigments, polycyclic pigments and dye lake pigments, as well as inorganic pigments. Examples of the azo pigments include soluble azo lake pigments, insoluble azo pigments and condensed azo pigments. Examples of the phthalocyanine pigments include metal phthalocyanine pigments and metal-free phthalocyanine pigments. Examples of the polycyclic pigments include quinacridone-based pigments, perylene-based pigments, perinone-based pigments, isoindoline-based pigments, isoindolinone-based pigments, dioxazine-based pigments, thioindigo-based pigments, anthraquinone-based pigments, quinophthalone-based pigments, metal complex pigments and diketopyrrolopyrrole (DPP). Representative examples of the inorganic pigments include carbon black and titanium oxide. These pigments may be used individually, or a combination of two or more pigments may be used.

3. Resin

In one preferred embodiment, in addition to the water and the colorant, the aqueous ink may also contain a water-dispersible resin and/or a water-soluble resin. By including at least one water-dispersible resin or water-soluble resin, the ink is able to produce good fixation of the colorant to the porous material, and as a result, superior coloring properties can be achieved with a small amount of colorant. A combination of a water-dispersible resin and a water-soluble resin may also be used.

Examples of the water-soluble resin include polyvinyl alcohol, polyacrylic acid, neutralized products of polyacrylic aid, acrylic acid/maleic acid copolymers, acrylic acid/sulfonic acid copolymers and styrene/maleic acid copolymers. These resins may be used individually, or a plurality of resins may be combined.

In the case of a water-dispersible resin, the use of negatively charged anionic resin particles in which the particle surfaces carry a minus charge is preferred. These resins can be dispersed in particulate form in water without dissolving, forming an oil-in-water (O/W) emulsion. Resins such as self-emulsifying resins in which anionic functional groups of the resin are located at the particle surfaces may be used, or resins that have been subjected to a surface treatment such as the adhesion of an anionic dispersant to the resin particle surfaces may be used. Typical examples of the anionic functional groups include carboxyl groups and sulfo groups, and examples of the anionic dispersant include anionic surfactants. When the surfaces are anionic, a chemical interaction occurs with the cationic water-dispersible resin in the surface treatment liquid mentioned above, and as a result, the fixation of the colorant can be strengthened even further, meaning the durability of the image can be further enhanced.

The surface charge of the resin particles can be evaluated by measuring the zeta potential. Specifically, the absolute value for the zeta potential is preferably 30 mV or greater.

The type of resin used is preferably a resin that forms a transparent coating. Further, during ink production, the resin may be added in the form of a polymer emulsion.

Typical resins include ethylene/vinyl chloride copolymer resins, (meth)acrylic resins, styrene/maleic anhydride copolymer resins, urethane resins, vinyl acetate/(meth)acrylic copolymer resins, vinyl acetate/ethylene copolymer resins, and polymer emulsions of these resins. These resins may be used individually, or a combination of a plurality of resins may be used. In this specification, a "(meth)acrylic resin" refers to both the acrylic resin and the methacrylic resin.

As mentioned above, by introducing anionic functional groups into these resins, or performing a surface treatment using an anionic dispersant or the like, a minus surface charge can be applied to the resin.

Among these water-dispersible resins (or their emulsions), from the viewpoint of achieving stable discharge performance form the inkjet head, and the viewpoint of achieving good adhesion to sound absorption materials formed from metal or the like, the use of a urethane resin having a glass transition temperature (Tg) of -35 to 40°C is preferred. Specific examples of such polymer emulsions include products manufactured by DKS Co., Ltd., including SUPERFLEX 460, 420, 470 and 460S (all product names for carbonate-based urethane polymer emulsions), 150HS (a product name for an ester-ether-based urethane polymer emulsion), and 740 and 840 (both product names for aromatic isocyanate-based ester-based urethane polymer emulsions), and products manufactured by DSM N.V., including NeoRez R-9660 and R-2170 (both product names for aliphatic polyester-based urethane polymer emulsions), NeoRez R-966, R-967 and R-650 (all product names for aliphatic polyether-based urethane polymer emulsions), and R-986 and R-9603 (both product names for aliphatic polycarbonates).

Further, from the viewpoint of the stability within the ink, the use of a (meth)acrylic resin or a (meth)acrylic resin copolymer is preferred. Specific examples of such resins include products manufactured by The Nippon Synthetic Chemical Industry Co., Ltd., including Mowinyl 966A, 6963 and 6960 (all product names for acrylic polymer emulsions) and Mowinyl 6969D and RA-033A4 (both product names for styrene/acrylic polymer emulsions), products manufactured by BASF Corporation, including Joncryl 7100, PDX-7370 and PDX-7341 (all product names for styrene/acrylic polymer emulsions), and products manufactured by DIC Corporation, including VONCOAT EC-905EF, 5400EF and CG-8400 (acrylic/styrene-based emulsions).

The water-dispersible resin may be composed of a single resin (or polymer emulsion) such as a urethane resin or an acrylic resin, or may be composed of a combination of a plurality of different resins (or polymer emulsions).

In those cases where the aqueous ink is used as an inkjet ink, the water-dispersible resin particles that form the emulsion preferably have a particle size suited to inkjet printing, and generally have an average particle size (the volume-based median size measured by a dynamic light-scattering method) that is preferably not more than 300 nm. Further, provided the particle size is of this level suitable for inkjet printing, the sound absorption performance can be maintained, without complete blocking of the pores of the porous material. In order to maintain this sound absorption performance, the average particle size is more preferably 250 nm or less, even more preferably 200 nm or less, and most preferably 150 nm or less. There are no particular limitations on the lower limit for the average particle size, but from the viewpoint of the storage stability of the ink, the average particle size is preferably at least about 5 nm, and is more preferably 10 nm or greater.

The amount (solid fraction amount) of the water-dispersible resin and/or water-soluble resin within the ink, reported as a ratio between the colorant and the resin (colorant : resin), is preferably within a range from 1:0.5 to 1:7 (weight ratio). By ensuring that the amount of the resin satisfies this range, good water abrasion resistance and high image quality can be achieved for the image printed on the surface of the porous material. If the amount of the resin is less than 0.5 relative to a value of 1 for the colorant, then there is a possibility that the fixability of the pigment may deteriorate, whereas if the amount of the resin is greater than 7, then the viscosity increases, and there is a possibility that if the aqueous ink is used as an inkjet ink, the ink may not be able to be discharged satisfactorily from the ink discharge head.

4. Non-Volatile Liquid

The ink preferably also contains at least one non-volatile liquid. In other words, in a preferred embodiment, the aqueous ink contains water, a non-volatile liquid, a water-dispersible resin and/or a water-soluble resin, and a colorant. By including the non-volatile liquid, better ink dischargeability is achieved when the aqueous ink is used for inkjet printing.

As mentioned above, the non-volatile liquid is a substance which, following heating of the decorative article (and the surface-treated article) at 90°C for 10 minutes, is retained within the article in a liquid state at normal temperature. Specifically, the non-volatile liquid is preferably an organic solvent or a surfactant.

The organic solvent is preferably a water-soluble (water-miscible) organic solvent that is miscible with water, and the non-volatile liquid can be used as the water-soluble organic solvent described below. In such cases, all of the water-soluble organic solvent may be composed of the non-volatile liquid, or a portion of the solvent may be the non-volatile liquid.

Specific examples of non-volatile liquids that remain within the article even following heating at 90°C for 10 minutes may be selected by using a boiling point of at least 250°C as a criterion. The non-volatile liquid preferably has a boiling point of 260°C or higher, and water-soluble organic solvents having a boiling point of 270°C or higher are even more preferred.

Examples include polyhydric alcohols, polyhydric alcohol ethers, acetates and amines having a boiling point of 250°C or higher, and polyhydric alcohols that degrade at a temperature of 250°C or higher without a clear boiling point. Specific examples of compounds that can be used favorably include triethylene glycol (boiling point: 288°C), tetraethylene glycol (boiling point: 323°C), tripropylene glycol (boiling point: 268°C), glycerol (boiling point: 290°C), triethylene glycol monobutyl ether (boiling point: 272°C), triethylene glycol butyl methyl ether (boiling point: 261°C), polyethylene glycol dimethyl ethers (boiling point: 264 to 294°C), tetraethylene glycol dimethyl ether (boiling point: 275°C), polyethylene glycol monomethyl ethers (boiling points: 290 to 310°C), tetraethylene glycol monobutyl ether (boiling point: 304°C), diethanolamine (boiling point: 280°C) and triethanolamine (boiling point: 335°C). Combinations of a plurality of these compounds may also be used.

The non-volatile liquid preferably causes a large increase in the ink viscosity when the volatile components in the ink are removed by drying, as this facilitates retention of the colorant and the resin component contained within the ink at the surface of the porous material. The expression "causes a large increase in the ink viscosity" refers to either liquids that themselves have a high viscosity, and liquids which, when the water and other volatile liquids within the ink are removed, exhibit poor miscibility with the colorant and the like in the ink, and tend to disrupt the dispersed state of the colorant and the like. Specific examples of such non-volatile liquids include glycerol, diglycerol, polyglycerol, triethylene glycol (boiling point: 288°C), tetraethylene glycol (boiling point: 323°C) and tripropylene glycol (boiling point: 268°C).

There are no particular limitations on the surfactants that can be used as the non-volatile liquid, and among the various surfactants described below, polymeric silicone-based surfactants, polymeric acetylene glycol-based surfactants, polymeric naphthalenesulfonic acid formalin condensation products, and polyoxyethylene alkyl ether sulfates and the like can be used as surfactants that function as the non-volatile liquid.

The amount of the non-volatile liquid is preferably not more than 60% by weight of the ink.

Accordingly, an ink according to one preferred embodiment contains water, a water-dispersible resin and/or a water-soluble resin and a colorant, and also contains a non-volatile liquid in an amount of not more than 60% by weight relative to the total weight of the ink.

5. Other Solvents

As mentioned above, water is preferred as the ink solvent, but in addition to water, the ink may also contain one or more water-soluble (water-miscible) organic solvents that are miscible with water. Organic compounds that are liquid at room temperature and either soluble or miscible with water can be used as these water-soluble organic solvents, and the use of a water-soluble organic solvent that mixes uniformly with an equal volume of water at 1 atmosphere and 20°C is preferred.

Either a single water-soluble organic solvent, or a combination of two or more such solvents, may be used. The amount of the water-soluble organic solvent within the ink, or the total amount of all such solvents within the ink in cases where two or more solvents are used, is preferably within a range from 5 to 60% by weight, and more preferably from 15 to 55% by weight.

Specific examples of water-soluble solvents that may be used include lower alcohols such as methanol, ethanol, 1-propanol, isopropanol, 1-butanol, 2-butanol, isobutanol and 2-methyl-2-propanol; glycols such as ethylene glycol, diethylene glycol, triethylene glycol, tetraethylene glycol, polyethylene glycol, propylene glycol, dipropylene glycol, tripropylene glycol and polypropylene glycol; glycerols such as glycerol, diglycerol, triglycerol and polyglycerol; acetins such as monoacetin, diacetin and triacetin; glycol ethers such as ethylene glycol mono methyl ether, ethylene glycol monoethyl ether, ethylene glycol monopropyl ether, ethylene glycol monobutyl ether, diethylene glycol monomethyl ether, diethylene glycol monoethyl ether, diethylene glycol monopropyl ether, diethylene glycol monobutyl ether, triethylene glycol monomethyl ether, triethylene glycol monoethyl ether, triethylene glycol monopropyl ether, triethylene glycol monobutyl ether, tetraethylene glycol monomethyl ether, tetraethylene glycol monoethyl ether, tetraethylene glycol dimethyl ether, and tetraethylene glycol diethyl ether; as well as triethanolamine, 1-methyl-2-pyrrolidone, 1,3-dimethyl-2-imidazolidinone, β-thiodiglycol and sulfolane. The boiling point of the water-soluble organic solvent is preferably at least 100°C, and is more preferably 150°C or higher.

Moreover, it is more preferable that the ink contains a water-soluble organic solvent having a surface tension of at least 30 mN/m. This makes the ink components such as the colorant and the resin less likely to penetrate into the interior of the pores of the porous material, thereby suppressing bleeding of fine lines and text and the like in the printed image. For example, glycerol has a surface tension of 63 mN/m, and is therefore preferred. The surface tension represents the value at 20°C.

In those cases where the non-volatile liquid is a water-soluble organic solvent rather than a surfactant, the water-soluble organic solvent having a surface tension of at least 30 mN/m may be a non-volatile liquid, or may not be a non-volatile liquid. In the former case, an ink according to a preferred embodiment contains a non-volatile liquid having a surface tension of at least 30 mN/m, and in the latter case, an ink according to a preferred embodiment contains both a non-volatile liquid having a surface tension of less than 30 mN/m, and a water-soluble organic solvent having a surface tension of at least 30 mN/m that is not a non-volatile liquid. Alternatively, the ink may contain both a non-volatile liquid having a surface tension of at least 30 mN/m, and a water-soluble organic solvent having a surface tension of at least 30 mN/m that is not a non-volatile liquid. In those cases where the non-volatile liquid is a surfactant, and is not a water-soluble organic solvent, an ink according to a preferred embodiment contains a non-volatile liquid that is not a water-soluble organic solvent, and a water-soluble organic solvent having a surface tension of at least 30 mN/m.

6. Surfactant

A surfactant may be added to the ink to control the affinity relative to the porous material.

Surfactants can be broadly classified into those in which the hydrophilic portion is ionic (cationic, anionic or zwitterionic surfactants) and those in which the hydrophilic portion is nonionic (nonionic surfactants). In the present embodiment, from the viewpoint of suppressing foaming of the treatment liquid, the use of a nonionic surfactant which is more resistant to foaming is preferred. Further, either a low-molecular weight or a high-molecular weight (typically indicating a molecular weight of at least 2,000) surfactant may be used, but the use of a high-molecular weight surfactant is preferred.

In terms of the HLB value, a surfactant with a value of about 5 to 20 is preferred.

Examples of the nonionic surfactant include ester-based surfactants such as glycerol fatty acid esters and fatty acid sorbitan esters, ether-based surfactants such as polyoxyethylene alkyl ethers, polyoxyethylene alkyl phenyl ethers and polyoxypropylene alkyl ethers, and ether-ester-based surfactants such as polyoxyethylene sorbitan fatty acid esters. In order to facilitate dispersion of the pigment in the ink, a pigment dispersant is preferably added as necessary, and therefore use of a surfactant having a pigment dispersion function as the surfactant is desirable.

In one embodiment, acetylene glycol-based surfactants and silicone-based surfactants can be used particularly favorably.

Examples of commercially available products include the acetylene glycols Surfynol 104E and 104H, and Surfynol 420, 440, 465 and 485 and the like which have structures in which ethylene oxide has been added to acetylene glycol (manufactured by Air Products and Chemicals, Inc.), the acetylene glycols OLFINE E-1004, E-1010, E-1020, PD-002W, PD-004, EXP.4001, EXP.4200, EXP.4123 and EXP.4300 and the like (manufactured by Nissin Chemical Industry Co., Ltd.), and the acetylene glycols ACETYLENOL E00 and E00P, and ACETYLENOL E40 and E100 and the like which have structures in which ethylene oxide has been added to acetylene glycol (manufactured by Kawaken Fine Chemicals Co., Ltd.).

Silicone-based surfactants have an extremely powerful surface tension reduction effect and contact angle reduction effect, and therefore even if the surface of the porous material is not hydrophilic, the treatment liquid can be rapidly diffused across the porous material surface. As a result, the functional components of the treatment liquid can be fixed uniformly across the surface of the porous material, meaning when the ink is subsequently printed, it can be fixed uniformly to the treated portion, enabling a printed image having superior color development and excellent quality to be obtained.

Among the various silicone-based surfactants, polyether-modified silicone-based surfactants, alkyl/aralkyl-comodified silicone-based surfactants, and acrylic silicone-based surfactants are preferred. Commercially available products that can be used particularly favorably include the "SILFACE SAG" series (manufactured by Nissin Chemical Co., Ltd.).

Any of the above surfactants may be used individually, or a combination of a plurality of surfactants having favorable compatibility may be used.

When used, the amount of the surfactant in the surface treatment liquid is preferably at least about 0.1% by weight, more preferably at least 0.3% by weight, and even more preferably 0.5% by weight or greater, but the amount of the surfactant is preferably not more than about 5% by weight, more preferably not more than 4% by weight, and even more preferably 3% by weight or less.

7. Other Components

In order to improve the dispersion of the pigment in the ink, a pigment dispersant may also be added to the ink if necessary. There are no particular limitations on the pigment dispersants that can be used, provided the dispersant is capable of stably dispersing the pigment in the solvent, but the use of conventional pigment dispersants typified by polymeric dispersants and surfactants having a pigment dispersion function is preferred. Specific examples of polymeric dispersants include the Solsperse (product name) series manufactured by The Lubrizol Corporation, the Joncryl (product name) series manufactured by Johnson Polymer, Inc., and the DISPERBYK series and BYK series manufactured by BYK Additives and Instruments GmbH.

The amount of the pigment dispersant need only be sufficient to ensure satisfactory dispersion of the above pigment within the above solvent, and for example, may be set appropriately to a weight ratio within a range from 0.01 to 2 relative to a value of 1 for the pigment.

Furthermore, in those cases where the ink is used for inkjet printing, a surface tension reducer may be added to the ink to reduce the surface tension of the ink, ensure good discharge stability when the ink is introduced into an inkjet head, and enhance the ink wettability of the porous material that represents the printing target. Surfactants that also have the effect of suppressing aggregation of the water-dispersible resin particles, such as the same types of surfactants added to the surface treatment liquid, can also be used as surface tension reducers. A surfactant that has both a pigment dispersion function and a surface tension reduction function may also be used.

The amount of the surface tension reducer in the ink is preferably at least about 0.1% by weight, more preferably at least 0.3% by weight, and even more preferably 0.5% by weight or greater. On the other hand, the amount of the surface tension reducer is preferably not more than about 5% by weight, more preferably not more than 4% by weight, and even more preferably 3% by weight or less.

Components other than those described above may also be added to the ink, provided they have no adverse effects on the properties of the ink, and examples of these other components include humectants, antifoaming agents, pH modifiers, antioxidants and preservatives.

There are no particular limitations on the method used for producing the ink, and appropriate conventional methods may be used. For example, the ink can be prepared by dispersing all of the components in a conventional dispersion device such as a beads mill, either in a single batch or in a number of separate portions, and then, if desired, passing the resulting dispersion through a conventional filtration device such as a membrane filter. For example, the ink can be prepared by first preparing a mixed liquid by uniformly mixing the total amounts of water and the colorant in advance, dispersing this mixed liquid using a dispersion device, subsequently adding the remaining components to the dispersion, and then passing the resulting dispersion through a filtration device.

<Surface Treatment Liquid>

The surface treatment liquid is a pretreatment liquid that is used on the porous material prior to decoration for the purpose of enhancing the fixability of the ink and ensuring favorable image color development properties and the like.

In light of this purpose, the surface treatment liquid preferably contains a solvent and a colorant-fixing agent (colorant permeation inhibitor). By subjecting the porous material to an advance pretreatment using this type of surface treatment liquid, the colorant within the ink can be retained at the surface of the porous material, even in the case of a functional porous material that exhibits extremely high liquid absorption, and as a result, an image can be formed with superior color development and no bleeding, while maintaining the inherent function of the porous material.

1. Solvent

Water is preferably used as the solvent, and tap water, ion-exchanged water, or deionized water or the like can be used. Water is a highly volatile solvent, and readily volatilizes following discharge onto the porous material, and therefore blocking of the pores of the porous material following the surface treatment can be prevented, and deterioration in the function of the porous material can also be prevented. Further, water is also non-toxic and extremely safe, and does not have the problems associated with VOCs and the like, meaning the surface-treated porous material is very environmentally friendly.

In addition to water, if necessary, the ink may also contain one or more water-soluble (water-miscible) organic solvents that are miscible with water. Examples of these water-soluble organic solvents include the same solvents as those mentioned above as water-soluble organic solvents for use in the ink.

The amount of solvent (including water) within the surface treatment liquid is preferably at least 60% by weight, and more preferably 65% by weight or more, of the total weight of the treatment liquid. There are no particular limitations on the upper limit for the amount of solvent, but the amount is usually not more than 95% by weight. The amount of water is preferably at least 20% by weight, and more preferably 25% by weight or more, of the surface treatment liquid, and is preferably not more than 95% by weight, and even more preferably 90% by weight or less.

2. Colorant-Fixing Agent

Examples of substances that can be used as the colorant-fixing agent include components that cause the colorant in the ink to aggregate on the surface of the porous material, by causing a reaction such as an agglutination reaction with the components of the aqueous ink, or by trapping the components of the aqueous ink within fine voids formed by the treatment liquid.

Specifically, the use of one or more substances selected from the group consisting of cationic water-dispersible resins, inorganic particles having a median size measured by a dynamic light-scattering method of less than 1 $\mu$m, and multivalent metal salts is preferred. These cationic water-dispersible resins, inorganic particles and multivalent metal salts that function as colorant-fixing agents may be used individually, but using a combination of two or more components is also preferred.

Here, a "colorant-fixing agent" describes a component having an action that causes fixation of the colorant in the ink to the surface of the porous material.

For example, when the porous material is a metal sound absorption material, because pores having a size in the order from several hundred microns to a thousand microns are formed in the material, if this material is simply printed, then the ink permeates into the interior of the porous material, and achieving satisfactory color development is problematic. In contrast, by performing a preliminary surface treatment using the above surface treatment liquid, the colorant-fixing agent adhered to the porous material can suppress permeation of the ink into the interior of the porous material, meaning even in the case of a low-viscosity ink such as an inkjet ink, an image having superior color development can be formed on the surface of the sound absorption material.

In this specification, the term "surface treatment" means adhering the surface treatment liquid to the porous material using an arbitrary technique such as coating, and this adhering of the surface treatment liquid is also referred to as "application". Further, the location to which the surface treatment liquid is adhered may be only the surface of the porous material, or may also include the interior (inner surfaces) of the pores.

This surface treatment liquid is preferably used as a pretreatment liquid that is applied prior to the formation of a printed image using the aqueous inkjet ink.

By using the surface treatment liquid of the embodiment prior to printing, decoration of the porous material by on-demand printing using an inkjet ink becomes possible, enabling a greater freedom of expression in accordance with the needs of the user, and enabling the formation of an image having superior color development and water abrasion resistance on the porous material.

[Cationic Water-Dispersible Resin]

Inks generally contain components having an anionic surface charge, and colorants such as pigments are also generally anionic. Accordingly, by using a surface treatment liquid containing a cationic component, and adhering the cationic component to the surface of the porous material in advance, an anion-cation reaction occurs with the ink, thereby suppressing permeation of the ink components such as the colorant into the porous material, meaning the colorant can be retained at the porous material surface.

Cationic component is preferably a water-dispersible resin in the form of water-dispersible resin particles. Based on the investigations of the inventors of the present invention, it was found that by using resin particles as a component of the surface treatment liquid, the water abrasion resistance of the image could be further enhanced.

The cationic water-dispersible resins are composed of positively charged resin particles in which the resin particle surfaces carry a plus charge, and these resins can be dispersed in particulate form in water without dissolving, forming an oil-in-water (O/W) emulsion. Resins such as self-emulsifying resins in which cationic functional groups of the resin are located at the particle surfaces may be used, or resins that have been subjected to a surface treatment such as the adhesion of a cationic dispersant to the resin particle surfaces may be used. Typical examples of the cationic functional group include a primary, secondary or tertiary amino group, as well as a pyridine group, imidazole group, benzimidazole group, triazole group, benzotriazole group, pyrazole group, and benzopyrazole group, whereas examples of the cationic dispersants include primary, secondary, tertiary and quaternary amino group-containing acrylic polymers, polyethyleneimines, cationic polyvinyl alcohol resins, and cationic water-soluble multibranched polyesteramide resins.

The amount of surface charge on the resin particles can be evaluated using a particle charge meter. By measuring the amount of anions or amount of cations required to neutralize the sample, the amount of surface charge can be calculated. Specifically, the amount of surface charge is preferably +300 $\mu$eq/g or greater. Examples of particle charge meters that can be used include the colloidal particle charge meter Model CAS, manufactured by Nihon Rufuto Co., Ltd.

A resin that forms a transparent coating is preferably used as the water-dispersible resin. Further, during production of the treatment liquid, the resin may be added as an oil-in-water polymer emulsion.

Representative examples of the water-dispersible resin include ethylene/vinyl chloride copolymer resins, (meth)acrylic resins, styrene/maleic anhydride copolymer resins, urethane resins, vinyl acetate/(meth)acrylic copolymer resins, vinyl acetate/ethylene copolymer resins, and polymer emulsions of these resins. Here, the expression "(meth)acrylic resins" includes both acrylic resins and methacrylic resins. These resins may be used individually, or a combination of a plurality of resins may be used. As described below, a polymer emulsion incorporating a complex of these resins may also be used.

As described above, a positive surface charge can be imparted to these resins either by introducing cationic functional groups, or by performing a surface treatment with a cationic dispersant or the like.

There are no particular limitations on the particle size of the resin particles, and a plurality of particle types having different particle sizes may be combined as appropriate.

In one embodiment, from the viewpoints of ease of retention on the surface of the porous material, and ease of fixation to the porous material surface by heated drying or the like, the resin preferably contains particles having a median size (average particle size) measured by a dynamic light-scattering method of 1 $\mu$m or greater. Further, the average particle size of the resin particles is preferably not more than 10 $\mu$m, as this enables the functionality of the material as a functional porous material to manifest satisfactorily, without completely blocking the pores of the porous material, and with good suppression of deterioration in the inherent function of the porous material.

In a more preferred embodiment, the water-dispersible resin contains large particles having a median size (average particle size) measured by a dynamic light-scattering method of at least 1 $\mu$m but not more than 10 $\mu$m, and small particles having a median size (average particle size) measured by a dynamic light-scattering method of less than 1 $\mu$m.

In other words, the surface treatment liquid according to one preferred embodiment contains water and a cationic water-dispersible resin, in which the cationic water-dispersible resin includes large particles having a median size measured by a dynamic light-scattering method of at least 1 $\mu$m but not more than 10 $\mu$m, and small particles having a median size measured by a dynamic light-scattering method of less than 1 $\mu$m.

In this embodiment, a surface treatment liquid containing two cationic water-dispersible resins having specific particle sizes is used. These resin particles enhance the fixability of the ink to the porous material surface without impairing the function of the porous material, and can also improve the water abrasion resistance. As a result, an image having superior color development, no bleeding and excellent durability can be formed across a wide area of the surface of the porous material.

More specifically, by using a combination of resin particles having a large particle size and resin particles having a small particle size in the treatment liquid, voids of an appropriate size can be retained in the treated porous material without complete blocking of the voids required for realizing the function of the porous material. It is thought that by fixing an ink to the surface treatment layer formed from these resin particles, the printed ink also does not completely block the voids within the porous material, and as a result, an ink layer having superior water abrasion resistance can be formed while favorably maintaining the function of the porous material.

The average particle size of the resin particles describes a volume-based particle size (median value) in a particle size distribution measured using a dynamic light-scattering method. Measurements may be performed at 25°C, using an apparatus such as the nanoparticle analyzer nano Partica SZ-100 (manufactured by Horiba, Ltd.) as a dynamic light-scattering particle size distribution measuring apparatus, with the water-dispersible resin diluted with water to a concentration of 0.5% by weight.

In the surface treatment liquid or in the ink described below, a configuration in which the resin particles exist as independent fine particles, and a configuration in which the particles exist in the form of clustered aggregates of the independent fine particles are possible, but in either case, the median size measured by the dynamic light-scattering method is deemed to represent the "average particle size".

Measurement of the average particle size of the above resin particles in the raw material emulsion state prior to preparation of the surface treatment liquid or the ink is preferable in terms of eliminating the effects of the colorant (pigment particles) in the case of an ink, and the resulting measured value can be used as the average particle size in the embodiment.

The average particle size of the large particles is preferably, in order of preference, 1 $\mu$m or greater, or 2 $\mu$m or greater, and is preferably, in order of preference, not more than 10 $\mu$m, not more than 7 $\mu$m, or not more than 5 $\mu$m.

The average particle size of the small particles is preferably, in order of preference, less than 1 $\mu$m, 500 nm or less, or 250 nm or less. Although there are no particular limitations on the lower limit for this average particle size, from the viewpoint of the storage stability of the surface treatment liquid, the average particle size is preferably at least about 5 nm, and more preferably 10 nm or greater.

Moreover, when the average particle size is measured for a mixture of the large particles and the small particles, two peaks preferably exist in the resulting particle size distribution, namely the large particles and the small particles preferably have different peak values.

Further, in addition to the difference in average particle size, the large particles and the small particles may also have other points of difference. For example, the large particles preferably have a minimum film-formation temperature (MFT) of 70°C or higher, whereas the MFT of the small particles is preferably less than 70°C. These MFT values describe the temperature required for the emulsion to undergo filming (film formation), and can be measured in accordance with JIS K 6828-2. A water-dispersible resin that does not undergo film formation at 70°C is deemed to be included within water-dispersible resins having an MFT of 70°C or higher.

It is even more preferable that the MFT of the large particles is 100°C or higher, and the MFT of the small particles is 50°C or lower, and because it is particularly preferable that the small particles undergo film formation at room temperature, the MFT of the small particles is even more preferably 40°C or lower.

Furthermore, the difference between the MFT of the large particles and the MFT of the small particles is preferably at least 30°C, more preferably at least 50°C, and even more preferably 100°C or greater.

The molecular structures of the large particles and the small particles may be the same, or particles of different molecular structures may be used.

The large particles are preferably composed of a polymer complex obtained by complexing a polymer having anionic functional groups typified by carboxyl groups and sulfo groups, and a polymer having cationic functional groups typified by amino groups and amide groups, wherein the polymer complex is an organic composite particle having a core-shell structure in which the core portion is composed of the anionic polymer and the shell portion is composed of the cationic polymer.

Examples of the anionic polymer in these types of organic composite particles include polymers containing (meth)acrylic acid as a repeating unit, and more specific examples include styrene/(meth)acrylic acid copolymers. This polymer may also include other copolymerizable vinyl compounds besides the styrene and (meth)acrylic acid.

Examples of the cationic polymer (basic polymer) in the organic composite particles include polymers containing a nitrogen-containing monomer, and specific examples include homopolymers and copolymers containing a nitrogen heterocyclic compound such as N-vinylpyrrolidone, N-vinylcaprolactam, N-vinyloxazolidone or N-vinylimidazole as a repeating unit. Examples of comonomers that may be used for forming a copolymer include one or more compounds selected from among typical vinyl compounds such as styrene, (meth)acrylate esters, vinyl acetate and acrylamide.

In order to achieve a cationic charge on the surfaces of the particles, the ratio between the amounts used of the anionic polymer and the cationic polymer, reported as a weight ratio, is preferably 3 to 10 parts of the cationic polymer per 1 part of the anionic polymer.

Examples of commercially available products that can be used favorably as these types of organic composite particles include PP-15 and PP-17 (both manufactured by Meisei Chemical Works, Ltd.).

From the viewpoint of the ink fixability to the treated porous material surface, the amount of the water-dispersible resin in the surface treatment liquid (when large particles and small particles are used, the combined solid fractions of both types of particles) is preferably at least 2% by weight, more preferably at least 3% by weight, and even more preferably 5% by weight or greater. On the other hand, if the viscosity of the treatment liquid is too high, then achieving uniform treatment becomes difficult, and therefore the amount of resin is preferably not more than 50% by weight, and more preferably 30% by weight or less.

Further, in terms of the ratio between the large particles and the small particles in those cases where both types of particles are used, if the amount of the small particles is too small relative to the large particles, then there is a possibility that the fixability may be unsatisfactory, whereas if the amount of the small particles is too large, then there is a possibility that the treatment layer may undergo filming and impair the inherent function of the porous material, and therefore the weight ratio between the two is preferably set so that the amount of the small particles is about 0.1 to 1.5 parts per 1 part of the large particles.

[Inorganic Particles]

The surface treatment liquid may contain inorganic particles as the colorant-fixing agent. These inorganic particles form an ink-receiving layer that can fix the colorant. At this time, the inorganic particles may fill the original voids of the porous material, but because the ink-receiving layer formed by the inorganic particles is itself a porous layer, the function of the porous material can be favorably maintained.

From the viewpoint of the fixability to the porous material, the inorganic particles preferably have a median size measured by a dynamic light-scattering method that is less than 1 $\mu$m, and the surface treatment liquid preferably contains inorganic particles having an average particle size of less than 1 $\mu$m. The surface treatment liquid may also include a portion of inorganic particles having a larger particle size.

There are no particular limitations on the type of inorganic particles used, and particles of silica, calcium carbonate, aluminum oxide, or titanium oxide or the like can be used favorably, and a combination of a plurality of types of particles may also be used.

In one preferred embodiment, the inorganic particles are positively charged cationic inorganic particles in which the surfaces of the particles carry a plus charge. The surface charge of the inorganic particles can be measured in the same manner as that described above for the surface charge of the resin particles.

From the viewpoint of the ink fixability to the treated porous material surface, the amount of the inorganic particles in the surface treatment liquid is preferably at least 1% by weight, more preferably at least 3% by weight, and even more preferably 5% by weight or greater. On the other hand, if the viscosity of the treatment liquid is too high, then achieving a uniform treatment becomes difficult, and therefore the amount of the inorganic particles is preferably not more than 40% by weight, and more preferably 30% by weight or less.

[Multivalent Metal Salts]

The surface treatment liquid may contain a multivalent metal salt as the colorant-fixing agent. The dispersed state of the colorant in the ink tends to be disrupted by the existence of a multivalent metal salt in the ink, facilitating the formation of an aggregate state. As a result, it is thought that by adhering a multivalent metal salt to the porous material, colorant that contacts the multivalent metal salt undergoes aggregation, and is more readily retained at the surface of the porous material.

Examples of the multivalent metal salt include halides, nitrates, sulfates, acetates, fatty acid salts, and lactates and the like of divalent or higher metals such as Mg, Ca, Al, Zn and Ba, and combinations of two or more of these salts may also be used.

From the viewpoint of the ink fixability to the treated porous material surface, the amount of the multivalent metal salt in the surface treatment liquid is preferably at least 0.5% by weight, and is more preferably, in order of preference, at least 1% by weight, at least 2% by weight, at least 2.5% by weight, or 3% by weight or greater. On the other hand, from the viewpoints of the stability of the treatment liquid and the uniformity of the image, the amount of the multivalent metal salt is preferably not more than 30% by weight, and is more preferably, in order of preference, not more than 20% by weight, not more than 15% by weight, or 10% by weight or less.

In those cases where a plurality of colorant-fixing agents is used, the each amount of the water-dispersible resin particles, the inorganic particles and the multivalent metal salt may be less than the respective preferred amounts described above.

3. Non-Volatile Liquid

In one preferred embodiment, the surface treatment liquid includes one or more non-volatile liquids of the same type as those described above for the ink. In a similar manner to the ink, this non-volatile liquid preferably causes a large increase in the viscosity of the surface treatment liquid when the volatile components in the surface treatment liquid are removed by drying, as this disrupts the dispersed state of the colorant-fixing agent in the treatment liquid, and facilitates retention of the colorant-fixing agent within the treatment liquid at the surface of the porous material.

The amount of the non-volatile liquid is preferably not more than 60% by weight of the treatment liquid.

Accordingly, in one preferred embodiment, the surface treatment liquid contains water, a colorant-fixing agent, and also contains not more than 60% by weight of a non-volatile liquid relative to the total weight of the surface treatment liquid.

4. Water-Soluble Organic Solvent

In one preferred embodiment, the surface treatment liquid includes one or more water-soluble organic solvents of the same type as those described above for the ink, and more preferably includes one or more water-soluble organic solvents having a surface tension of at least 30 mN/m. By using a water-soluble organic solvent having a surface tension of at least 30 mN/m, the color-fixing agent in the surface treatment liquid can be retained more easily at the surface of the porous material. This surface tension represents the value at 20°C.

In those cases where the surface treatment liquid contains a non-volatile liquid, and the non-volatile liquid is a water-soluble organic solvent, this water-soluble organic solvent having a surface tension of at least 30 mN/m may be a non-volatile liquid in a similar manner to that described above for the ink. In other words, in one preferred embodiment, the surface treatment liquid contains a non-volatile liquid having a surface tension of at least 30 mN/m, in another preferred embodiment, the surface treatment liquid contains both a non-volatile liquid having a surface tension of less than 30 mN/m, and a water-soluble organic solvent having a surface tension of at least 30 mN/m that is not a non-volatile liquid, and in yet another preferred embodiment, the surface treatment liquid contains a non-volatile liquid having a surface tension of at least 30 mN/m, and a water-soluble organic solvent having a surface tension of at least 30 mN/m that is not a non-volatile liquid.

5. Surfactant

The surface treatment liquid preferably also contains a surfactant to reduce the surface tension of the surface treatment liquid, thus enabling a more uniform application to the porous material surface (enhancing the affinity relative to the porous material), or to suppress the aggregation of the water-dispersible resin particles of small particle size (the small particles) or the inorganic particles, thus improving the storage stability of the liquid.

Details relating to the surfactant are the same as those described for the surfactant added to the ink.

When a surfactant is used, the amount of the surfactant in the surface treatment liquid is preferably at least about 0.1% by weight, more preferably at least 0.3% by weight, and even more preferably 0.5% by weight or greater, but the amount of the surfactant is preferably not more than about 5% by weight, more preferably not more than 4% by weight, and even more preferably 3% by weight or less.

6. Other Components

Components other than those described above may also be added to the treatment liquid, provided they do not impair the functionality of the treatment liquid, and examples of these other components include humectants, antifoaming agents, pH modifiers, antioxidants and preservatives.

When the colorant-fixing agent is inorganic particles or a multivalent metal salt, a binder resin is preferably added to enhance the fixability of the treatment liquid to the base material.

There are no particular limitations on the binder resin, and examples of water-soluble resins that can be used favorably include the aforementioned ethylene/vinyl chloride copolymer resins, (meth)acrylic resins, styrene/acrylic resins, styrene/maleic anhydride copolymer resins, urethane resins, vinyl acetate/(meth)acrylic copolymer resins, vinyl acetate/ethylene copolymer resins, silicone resins, and polymer emulsions of these resins. These resins may be added individually, or a plurality of resins may be added. Further, a crosslinking component that causes crosslinking of these resins may also be included. Examples of this crosslinking component include block isocyanates, oxazoline group-containing compounds, (poly)carbodiimides and aziridines, but this is not an exhaustive list. In those cases where the treatment liquid contains a cationic water-soluble resin as the colorant-fixing agent, this cationic water-soluble resin can also function as a binder resin.

The treatment liquid can be prepared by dispersing the water and the colorant-fixing agent in a conventional dispersion device such as a beads mill, either in a single batch or in a number of separate portions, and then, if desired, passing the resulting dispersion through a conventional filtration device such as a membrane filter.

<Use of Surface Treatment Liquid>

The surface treatment liquid is preferably used prior to decoration of the functional porous material using an aqueous ink. In other words, in one embodiment, use of the surface treatment liquid is as a pretreatment for producing a surface-treated article containing not more than 55 g/m$^2$ of non-volatile liquid, prior to the formation of a printed image on the surface of the functional porous material.

<Method for Producing Surface-Treated Article>

Production of the surface-treated porous material (surface-treated article) is preferably performed by applying the surface treatment liquid containing the above components to the surface of a porous material. In other words, the method for producing a surface-treated article preferably includes a step of forming a surface treatment layer using a surface treatment liquid containing water, a colorant-fixing agent, and not more than 60% by mass of a non-volatile liquid relative to the total mass of the surface treatment liquid.

Following adhesion and drying of this treatment liquid, printing is preferably performed using an aqueous ink. The porous material may also be subjected to another arbitrary treatment prior to the surface treatment with this treatment liquid.

In one preferred embodiment, the method for producing a surface-treated porous material includes a step of applying a surface treatment liquid containing water and a cationic water-dispersible resin to the surface of the porous material, in which the cationic water-dispersible resin contains large particles having a median size measured by a dynamic light-scattering method of at least 1 μm but not more than 10 μm, and small particles having a median size measured by a dynamic light-scattering method of less than 1 μm.

When the surface treatment liquid contains both large particles and small particles as the cationic water-dispersible resin, application of the surface treatment liquid may be performed in two stages. In other words, a surface treatment liquid containing either one of the large particles or the small particles, and a surface treatment liquid containing the other particles may be prepared, and these two surface treatment liquids may then be applied separately to the porous material. When the large particles and the small particles are applied separately, if the small particles are applied first, then there is a possibility that the small particles within the surface treatment liquid may permeate into the interior of the porous material, weakening the effect of the particles as a binder for the ink, and therefore it is preferable that the large particles are applied first.

Adhesion of the treatment liquid to the surface of the porous material may be performed by using a brush, roller, bar coater, air knife coater, or sprayer or the like to uniformly coat the surface of the porous material, or by using a printing technique such as inkjet printing, gravure printing or flexographic printing to print an image using the treatment liquid. In other words, the surface treatment liquid may be applied across the entire surface of the porous material, or may be applied only to those locations that are required, for example only to those locations onto which inkjet printing is performed using the aforementioned ink.

The coating amount (adhesion amount) of the treatment liquid differs depending on the variety and material and the like of the porous material, and can therefore not be uniformly specified, but in the embodiment, coating is preferably performed in the following manner to ensure that the amount of non-volatile liquid in the article satisfies the prescribed range.

More specifically, by adjusting the concentration of the non-volatile liquid in the surface treatment liquid and/or adjusting the coating amount of the surface treatment liquid, the amount of non-volatile liquid in the surface-treated article can be appropriately set to a preferred amount of at least zero. The coating amount of the surface treatment liquid can be adjusted as desired, for example, by selecting the coating range (coating area), performing overcoating as required, or altering the spray pressure in the case of spray-coating.

<Method for Producing Decorative Article>

The decorated porous material (decorative article) is a functional porous material having a printed image on the surface, and is preferably produced by forming a printed image using an aqueous ink. In other words, the method for producing a decorative article preferably includes a step of forming a printed image using an aqueous ink containing water, a water-dispersible resin and/or a water-soluble resin, a colorant, and a non-volatile liquid in an amount of not more than 60% by mass relative to the total mass of the ink.

In order to ensure that the amount of non-volatile liquid in the decorative article satisfies the preferred range described above, a surface treatment liquid containing the non-volatile liquid may be used in the manner described above, or an aqueous ink containing the non-volatile liquid may be used. Alternatively, a surface treatment liquid containing a non-volatile liquid and an aqueous ink containing a non-volatile liquid may both be used, and in such cases, the non-volatile liquid contained in the surface treatment liquid and the non-volatile liquid contained in the aqueous ink may be the same or different component.

When a surface treatment liquid containing a non-volatile liquid is used, this liquid may be used in combination with an aqueous ink that does not contain a non-volatile liquid. On the other hand, when an aqueous ink containing a non-volatile liquid is used, the surface treatment using a surface treatment liquid may be omitted, or if necessary, a different surface treatment that does not use a surface treatment liquid may be performed to enhance the fixability of the printed image to the porous material.

In other words, in one embodiment, printing using an aqueous ink is preferably performed after the above surface treatment, but the surface treatment need not necessarily be performed, or alternatively, a porous material that has been pretreated using a different treatment to the above surface treatment may be used.

In those cases where the amount of non-volatile liquid in the decorative article is adjusted using an aqueous ink containing a non-volatile liquid, then in a similar manner to that described for the surface treatment liquid, the amount of non-volatile liquid can be adjusted to a preferred amount by appropriate adjustment of the concentration of the non-volatile liquid in the aqueous ink and/or by adjustment of the image area or image thickness formed using the aqueous ink.

In one preferred embodiment, the method for producing a decorative article includes a step of applying a surface treatment liquid containing water and a cationic water-dispersible resin, and a step of performing inkjet printing using an aqueous ink containing water, a water-dispersible resin and/or a water-soluble resin, and a colorant. The cationic water-dispersible resin preferably contains large particles having a median size measured by a dynamic light-scattering method of at least 1 $\mu$m but not more than 10 $\mu$m, and small particles having a median size measured by a dynamic light-scattering method of less than 1 $\mu$m.

Inkjet printing to the porous material using an aqueous ink may be performed using a typical recording head, and there are no particular limitations on the printing system or the apparatus used. By performing drying following the printing (decoration), the water and other volatile components are volatilized from the inkjet-printed ink, yielding a functional decorated porous material having an image composed mainly of the resin and the colorant at the surface of the porous material.

There are no particular limitations on the recording surface area of the image, and any arbitrary pattern, text (or character), or combination of pattern and text may be selected freely.

Printing conditions which are effective in obtaining a high-quality decorative image include (i) reducing the size of the ink drops, (ii) reducing the printing speed, (iii) performing unidirectional printing, (iv) performing printing while warming the porous material, (v) lowering the print resolution, or (vi) performing printing using a combination of these methods.

The printing condition described above in which printing is performed while warming the porous material is particularly effective, regardless of the performance of the porous material, in those cases where it is necessary to obtain an image of superior color development using a small amount of ink, and in those cases where it is desirable to perform uniform printing of a pattern on a porous material having significant surface unevenness or across a plurality of porous materials having different levels of ink absorption performance. By performing printing while warming the porous material, the components besides water within the ink, such as the pigment, can be formed in positions close to the surface of the porous material, and therefore the effect on the function and shape of the porous material can be minimized, and a stable image can be obtained.

The porous material may be heated following completion of the printing, and this enables the water and other volatile components within the ink to be volatilized completely, while the colorant in the ink can be fixed to the porous material by the water-dispersible resin.

Any appropriate method may be used for warming the porous material, and there are no particular limitations on the heating conditions, provided the temperature is set so that the nozzles used for the inkjet printing do not dry out, making the ink discharge unstable, and provided the conditions enable an appropriate amount of the non-volatile liquid to be retained in the porous material. For example, heating may be conducted within a range from 50 to 100°C.

There are no particular limitations on the inkjet printing device used for performing the decoration, and for example, a decorating device can be used which includes at least a mounting section for mounting the porous material, a surface treatment liquid coating section for applying the surface treatment liquid to the surface of the porous material, and an inkjet recording head disposed so as to enable subsequent inkjet printing by discharging an ink. The device preferably also contains an optional heating section for heating the porous material.

More specifically, the decorating device may include an input section (such as a scanner) for providing the electronic data (containing a pixel value for each of the pixels) for the decorative image that is to be formed, a recording head section that records an image by discharging an aqueous ink onto the surface of the porous material, a transport section which, with the porous material in a mounted state, transports the porous material to a location opposing the discharge nozzles formed on the lower surface of the recording head section, and a surface treatment liquid coating section which, prior to the porous material reaching the recording head section, applies a surface treatment liquid to the surface of the porous material. The device is preferably also provided with a heating section (any of various types of heaters, such as a ceramic heater) which heats the decoration region of the porous material at any arbitrary stage during printing, or before or after printing, thereby accelerating the drying of the discharged surface treatment liquid and/or ink.

EXAMPLES

The present invention is described below in further detail based on a series of examples, but the present invention is in no way limited to only these examples. Unless specifically stated otherwise, "%" indicates "% by weight". The blend amounts of the various components shown in the tables also indicate "% by weight" values.

<Preparation of Surface Treatment Liquids>

The components shown in Table 1-1 and Table 1-2 were premixed in the proportions shown in each table, and the resulting mixtures were then each dispersed for one minute using a homogenizer to obtain treatment liquids 1 to 14.

Details relating to the various raw materials shown in Table 1-1 and Table 1-2 are as follows.

Glycerol: manufactured by Wako Pure Chemical Industries, Ltd. (boiling point: 290°C, surface tension: 63 mN/m)
Methylpolyglycol: manufactured by Nippon Nyukazai Co., Ltd. (boiling point: 295°C, surface tension: 33.1 mN/m)
Triethylene glycol monobutyl ether: manufactured by Tokyo Chemical Industry Co., Ltd. (boiling point: 278°C, surface tension: 28 mN/m)
Ethylene glycol: manufactured by Wako Pure Chemical Industries, Ltd. (boiling point: 197.3°C, surface tension: 48 mN/m)
Isopropanol: manufactured by Wako Pure Chemical Industries, Ltd. (boiling point: 82.6°C, surface tension: 21 mN/m)
PP-15 (product name): manufactured by Meisei Chemical Works, Ltd., cationic water-dispersible organic composite particles (median size: 1.8 $\mu$m)
$CaCl_2$ aqueous solution: a 50% aqueous solution of calcium chloride
SNOWTEX AK-L (product name): manufactured by Nissan Chemical Industries, Ltd., a cationic colloidal silica (median size: 79 nm)
POLYSOL AP-1370 (product name): manufactured by Showa Denko K.K., a cationic water-based acrylic polymer emulsion (average particle size: 206 nm)
POLYSOL AE-803 (product name): manufactured by Showa Denko K.K., a cationic water-based acrylic polymer emulsion (average particle size: 419 nm)
Mowinyl 7720 (product name): manufactured by The Nippon Synthetic Chemical Industry Co., Ltd., a nonionic acrylic polymer emulsion (median size: 379 nm)
OLFINE E1010 (product name): manufactured by Nissin Chemical Industry Co., Ltd., an acetylene glycol-based surfactant

SILFACE SAG503A (product name): manufactured by Nissin Chemical Industry Co., Ltd., a silicone-based surfactant

The average particle size of each resin was measured using a dynamic light-scattering particle size distribution measuring apparatus "Nanoparticle Analyzer nano Prtica SZ-100" (manufactured by Horiba, Ltd.), by diluting each resin dispersion with purified water to achieve a particle concentration of 0.5% by weight, and then measuring the volume-based median size at a temperature of 25°C under settings including a dispersion medium refractive index of 1.333 and a sample refractive index of 1.600, and with the operational conditions set to "polydispersity" and "narrow".

Table 1-1 Surface Treatment Liquid Production Examples (1)

| Blend Component | | Non-volatile fraction concentration (%) | Treatment liquid 1 | Treatment liquid 2 | Treatment liquid 3 | Treatment liquid 4 | Treatment liquid 5 | Treatment liquid 6 | Treatment liquid 7 |
|---|---|---|---|---|---|---|---|---|---|
| Water | | | 67.1 | 27.2 | 5.2 | 18.1 | 17.1 | 21.3 | 14.8 |
| Water-soluble organic solvent | Glycerol (boiling point: 290°C) | 100.0% | | 10.0 | 32.0 | 49.0 | 28.0 | 15.0 | 45.0 |
| | Methylpolyglycol (boiling point: 295°C) | 100.0% | | | | | | | |
| | Triethylene glycol monobutyl ether (boiling point: 278°C) | 100.0% | | | | | 22.0 | | |
| | Ethylene glycol (boiling point: 197.3°C) | 100.0% | | | | | | | |
| | Isopropanol (boiling point: 82.6°C) | 100.0% | | | | | | | |
| Cationic organic composite particles | PP-15 | 25.3% | 19.8 | 39.5 | 39.5 | 19.8 | 19.8 | 39.5 | |
| Cationic water-dispersible resin | POLYSOL AP-1370 | 47.0% | | 21.3 | 21.3 | | | | |
| | POLYSOL AE-803 | 45.0% | 11.1 | | | 11.1 | 11.1 | | 22.2 |
| Multivalent metal salt | $CaCl_2$ aqueous solution | 50.0% | | | | | | | 16.0 |
| Cationic colloidal silica | SNOWTEX AK-L | 20.0% | | | | | | | |
| Nonionic water-dispersible resin | Mowinyl 7720 | 45.0% | | | | | | 22.2 | |
| Surfactant | OLFINE E1010 | 100.0% | 1.0 | 1.0 | 1.0 | 1.0 | 1.0 | 1.0 | 1.0 |
| | SILFACE SAG503A | 100.0% | 1.0 | 1.0 | 1.0 | 1.0 | 1.0 | 1.0 | 1.0 |
| Total | | | 100.0 | 100.0 | 100.0 | 100.0 | 100.0 | 100.0 | 100.0 |
| Amount of non-volatile components in treatment liquid (%) | | | 12.0% | 32.0% | 54.0% | 61.0% | 62.0% | 37.0% | 65.0% |

| Blend Component | Non-volatile fraction concentration (%) | Treatment liquid 1 | Treatment liquid 2 | Treatment liquid 3 | Treatment liquid 4 | Treatment liquid 5 | Treatment liquid 6 | Treatment liquid 7 |
|---|---|---|---|---|---|---|---|---|
| Amount of non-volatile liquid in treatment liquid * (%) | | 2.0% | 12.0% | 34.0% | 51.0% | 52.0% | 17.0% | 47.0% |
| * Excludes water and volatile organic solvents | | | | | | | | |

Table 1-2 Surface Treatment Liquid Production Examples (2)

| Blend Component | | Non-volatile fraction concentration (%) | Treatment liquid 8 | Treatment liquid 9 | Treatment liquid 10 | Treatment liquid 11 | Treatment liquid 12 | Treatment liquid 13 | Treatment liquid 14 |
|---|---|---|---|---|---|---|---|---|---|---|
| Water | | | 49.9 | 61.4 | 12.9 | 12.1 | 75.9 | 61.9 | 57.1 |
| Water-soluble organic solvent | Glycerol (boiling point: 290°C) | 100.0% | | | | | | | |
| | Methylpolyglycol (boiling point: 295°C) | 100.0% | | | | | | | 10.0 |
| | Triethylene glycol monobutyl ether (boiling point: 278°C) | 100.0% | 27.0 | 15.5 | | | 3.0 | | |
| | Ethylene glycol (boiling point: 197.3°C) | 100.0% | | | 49.0 | | | 2.0 | |
| | Isopropanol (boiling point: 82.6°C) | 100.0% | | | | 55.0 | | | |
| Cationic organic composite particles | PP-15 | 25.3% | | | | 19.8 | | | 19.8 |
| Cationic water-dispersible resin | POLYSOL AP-1370 | 47.0% | | | | | | | |
| | POLYSOL AE-803 | 45.0% | 11.1 | 11.1 | 11.1 | 11.1 | 11.1 | 11.1 | 11.1 |
| Multivalent metal salt | CaCl$_2$ aqueous solution | 50.0% | 10.0 | 10.0 | | | 10.0 | | |
| Cationic colloidal silica | SNOWTEX AK-L | 20.0% | | | 25.0 | | | 25.0 | |
| Nonionic water-dispersible resin | Mowinyl 7720 | 45.0% | | | | | | | |

(continued)

| Blend Component | | Non-volatile fraction concentration (%) | Treatment liquid 8 | Treatment liquid 9 | Treatment liquid 10 | Treatment liquid 11 | Treatment liquid 12 | Treatment liquid 13 | Treatment liquid 14 |
|---|---|---|---|---|---|---|---|---|---|---|
| Surfactant | OLFINE E1010 | 100.0% | 1.0 | 1.0 | 1.0 | 1.0 | | | 2.0 |
| | SILFACE SAG503A | 100.0% | 1.0 | 1.0 | 1.0 | 1.0 | | | |
| Total | | | 100.0 | 100.0 | 100.0 | 100.0 | 100.0 | 100.0 | 100.0 |
| Amount of non-volatile components in treatment liquid (%) | | | 39.0% | 27.5% | 12.0% | 12.0% | 13.0% | 10.0% | 12.0% |
| Amount of non-volatile liquid in treatment liquid * (%) | | | 29.0% | 17.5% | 2.0% | 2.0% | 3.0% | 0.0% | 12.0% |
| * Excludes water and volatile organic solvents | | | | | | | | | |

<Preparation of Aqueous Inks>

The components shown in Table 2 were mixed in the proportions shown in Table 2, and the resulting mixtures were each filtered through a membrane filter with a pore size of 3 μm, thus preparing aqueous ink sets 1 to 4.

Details relating to the raw materials shown in Table 2 are as follows (but excluding those raw materials that also appeared in Table 1).

BONJET BLACK CW-4 (product name): manufactured by Orient Chemical Industries, Ltd., a water-based self-dispersing carbon black dispersion
CAB-O-JET 250C (product name): manufactured by Cabot Corporation, a water-based self-dispersing cyan pigment dispersion
CAB-O-JET 260M (product name): manufactured by Cabot Corporation, a water-based self-dispersing magenta pigment dispersion
CAB-O-JET 270Y (product name): manufactured by Cabot Corporation, a water-based self-dispersing yellow pigment dispersion
SUPERFLEX 470 (product name): manufactured by DKS Co., Ltd., a water-based urethane polymer emulsion
DEKA BONTIGHTER HUX-370 (product name): manufactured by ADEKA Corporation, an anionic water-based urethane polymer emulsion (average particle size: 10 nm).
Surfynol 465 (product name): manufactured by Nissin Chemical Co., Ltd., an acetylene glycol-based surfactant

Table 2 Aqueous Ink Production Examples

| Blend Component | | Non-volatile fraction concentration (%) | Aqueous ink set 1 | | | | Aqueous ink set 2 | | | | Aqueous ink set 3 | | | | Aqueous ink set 4 | | | |
|---|---|---|---|---|---|---|---|---|---|---|---|---|---|---|---|---|---|---|
| | | | C | M | Y | K | C | M | Y | K | C | M | Y | K | C | M | Y | K |
| Pigment dispersion | BONJET BLACK CW-4 | 13% | 23.1 | | | | 23.1 | | | | 23.1 | | | | 23.1 | | | |
| | CAB-O-JET 250C | 10% | | 30.0 | | | | 30.0 | | | | 30.0 | | | | 30.0 | | |
| | CAB-O-JET 260M | 10% | | | 30.0 | | | | 30.0 | | | | 30.0 | | | | 30.0 | |
| | CAB-O-JET 270Y | 10% | | | | 30.0 | | | | 30.0 | | | | 30.0 | | | | 30.0 |
| Binder | SUPERFLEX 470 | 38% | 7.9 | 7.9 | 7.9 | 7.9 | | | | | 7.9 | | 7.9 | | 7.9 | 7.9 | 7.9 | 7.9 |
| | ADEKA BONTIGHTER HUX-370 | 33% | | | | | 9.0 | 9.0 | 9.0 | 9.0 | | 9.0 | | 9.0 | | | | |
| Water-soluble organic solvent | Glycerol (boiling point: 290°C) | 100% | 20.0 | 20.0 | 20.0 | 20.0 | | | | | 30.0 | 30.0 | 30.0 | 30.0 | | | | |
| | Triethylene glycol monobutyl ether (boiling point: 278°C) | 100% | | | | | | | | | 20.0 | 20.0 | 20.0 | 20.0 | | | | |
| | Ethylene glycol (boiling point: 197.3°C) | 100% | | | | | 40.0 | 40.0 | 40.0 | 40.0 | | | | | 55.0 | 55.0 | 55.0 | 55.0 |
| Surfactant | Surfynol 465 | 100% | 3.0 | 3.0 | 3.0 | 3.0 | 1.0 | 1.0 | 1.0 | 1.0 | 3.0 | 3.0 | 3.0 | 3.0 | 14.0 | 7.1 | 7.1 | 7.1 |
| | Water | | 46.0 | 39.1 | 39.1 | 39.1 | 26.9 | 20.0 | 20.0 | 20.0 | 16.0 | 8.0 | 9.1 | 8.0 | | | | |
| | Total | | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| Amount of non-volatile components in ink (%) | | | 29.0% | 29.0% | 29.0% | 29.0% | 7.0% | 7.0% | 7.0% | 7.0% | 59.0% | 59.0% | 59.0% | 59.0% | 6.0% | 6.0% | 6.0% | 6.0% |

(continued)

| Blend Component | Non-volatile fraction concentration (%) | Aqueous ink set 1 | | | | Aqueous ink set 2 | | | | Aqueous ink set 3 | | | | Aqueous ink set 4 | | | |
|---|---|---|---|---|---|---|---|---|---|---|---|---|---|---|---|---|---|
| | | C | M | Y | K | C | M | Y | K | C | M | Y | K | C | M | Y | K |
| Amount of non-volatile liquid in ink * (%) | | 23.0% | 23.0% | 23.0% | 23.0% | 1.0% | 1.0% | 1.0% | 1.0% | 53.0% | 53.0% | 53.0% | 53.0% | 0.0% | 0.0% | 0.0% | 0.0% |
| * Excludes water and volatile organic solvents | | | | | | | | | | | | | | | | | |

<Production of Surface-Treated Articles>

Various porous materials were subjected to surface treatment using the treatment liquids 1 to 14. The treatment was performed using a spray gun, and following the treatment, each porous material was dried in an oven at 90°C for 10 minutes to obtain a surface-treated article.

The porous materials used are as follows.

[Sound Absorption Materials]

NDC CALME (product name): manufactured by NDC Sales Co., Ltd., an aluminum sintered sound absorption plate (main function: sound absorption, thickness: 3.0 mm)

Acoustic Mute Board (product name): manufactured by Acoustic Advance Inc., a polyester fiber sound absorption board (main function: sound absorption, thickness: 5.0 mm)

CARLTON (product name): manufactured by Nohara Sangyo Co., Ltd., a glass fiber sound absorption sheet (main function: sound absorption, thickness: 0.7 mm)

[Water Absorption Material]

BELCLEAN (product name): manufactured by AION Co., Ltd., PVFM (main function: heat insulation, thickness: 25 mm)

<Measurement of Amount of Non-Volatile Liquid in Surface-Treated Articles>

A surface-treated article that had been cut to dimensions of 100 mm × 100 mm was placed in a container having a bottom surface with a size of 110 mm × 110 mm, the article was immersed by adding sufficient ion-exchanged water to the container to completely immerse the entire article, and the immersed article was left to stand overnight. After this standing period, the treated article was pulled out of the liquid in which it had been immersed, and secured above the container for 30 seconds, allowing the liquid contained in the article to fall into the container under its own weight, and the article was then washed with 20 ml of ion-exchanged water while still secured above the container, with the wash liquid also collected in the container. The liquid in the container was heated at 90°C for 10 hours to remove the water from the liquid. The weight of the liquid remaining in the container was then measured, and recorded as the amount of non-volatile liquid in the treated article. In order to account for water content that was unable to be removed, the moisture content in the liquid was measured using a Karl Fischer moisture meter, and the amount of non-volatile liquid other than this moisture content was calculated.

<Production of Decorative Articles>

Each of the ink sets 1 to 4 described above was loaded into the various color ink heads in a commercially available aqueous pigment inkjet printer, and a black solid image and an image composed of text (characters) and fine lines were printed onto an untreated porous material and a surface-treated article. Following printing, the articles were heated and dried in an oven at 90°C for 10 minutes to obtain decorative articles.

<Measurement of Amount of Non-Volatile Liquid in Decorative Articles>

Each of the obtained decorative articles was cut to dimensions of 100 mm × 100 mm, and the amount of non-volatile liquid in the decorative article was measured in the same manner as that described above for the surface-treated article.

<Evaluation of Decorative Articles>

Each decorative article was evaluated for each of the following items.

1. Color Development

The OD value of the solid image on the obtained decorative article was measured one day after decoration. The OD value was measured using an optical densitometer (RD920, manufactured by Macbeth Corporation).

2. Fine Line Properties

The fine line portion on the obtained decorative article was inspected visually. The fine line image is an image in which the lines are arranged with 1 mm spacings. These lines were also printed onto an inkjet glossy photo paper, the image on the glossy paper and the image on the decorative article were then compared, and an evaluation of the levels of bleeding, blurring, and broken lines was performed.

3. Text (Characters) Reproducibility

The text printed portion on the obtained decorative article was evaluated visually. The text image was an image containing lines of kanji characters in the Mincho typeface at sizes ranging from 6 pt to 16 pt. This text was also printed onto an inkjet glossy photo paper, the image on the glossy paper and the image on the decorative article were then compared, and an evaluation of the levels of blurring and bleeding of the text was performed.

4. Rubbing Resistance Evaluation

Using a crockmeter, each of the decorated portions of each decorative article was rubbed with a cotton cloth, and the number of back and forth rubbing repetitions required to alter the image was evaluated.

5. Sound Absorption Performance

The sound absorption performance of an aluminum powder sintered sound absorption plate "NDC CALME" was evaluated using the method for measurement of sound absorption coefficients in a reverberation room method prescribed in JIS A 1409. A back air layer of 50 mm was provided, and the sound absorption coefficient was measured at various frequencies.
The sound absorption performance of a polyester fiber sound absorption board "Acoustic Mute Board" was evaluated using the method for measurement of sound absorption coefficients in a reverberation room method prescribed in JIS A 1409. A back air layer of 100 mm was provided, and the sound absorption coefficient was measured at various frequencies.
The sound absorption performance of a glass fiber sound absorption sheet "CARLTON" was evaluated using the method for measurement of sound absorption coefficients in a reverberation room method prescribed in JIS A 1409. For the measurement of a sound absorption material having a thickness of less than 1 mm, a type E-300 was installed to provide a back air layer of 300 mm, and the sound absorption coefficient was measured at various frequencies.

6. Water Absorption Evaluation

First, 0.04 g of ion-exchanged water was dripped onto the surface of the water absorption material, and the time required for the water to be completely absorbed by the water absorption material, so that no water was visible from the surface of the water absorption material, was measured as the absorption time.

7. Heat Insulation Performance

Using a guarded hot plate thermal conductivity tester, the thermal conductivity was measured at an average temperature of 70°C in accordance with JIS A 1420 (1999).
The evaluation criteria for each of the above evaluations are shown in Table 3.

Table 3 Evaluation criteria

| Item | | Evaluation | Criteria |
|---|---|---|---|
| Color development | | AAA | Density of solid portion of decorative image: $1.30 \leq$ OD value |
| | | AA | Density of solid portion of decorative image: $1.20 \leq$ OD value < 1.30 |
| | | A | Density of solid portion of decorative image: $1.00 \leq$ OD value < 1.20 |
| | | B | Density of solid portion of decorative image: $0.80 \leq$ OD value < 1.00 |
| | | C | Density of solid portion of decorative image: 0.80 < OD value |
| Fine lines | | AAA | Absolutely no bleeding, blurring or breaking of fine lines |
| | | AA | Some minor bleeding of fine lines, but at a negligible level |
| | | A | Clear bleeding, blurring or breaking of fine lines, but lines still recognizable as independent lines |
| | | B | Blurring of fine lines, with adjacent lines joined in places, or blurring or line breakage means lines are not formed |
| | | C | Major blurring of fine lines, lines not reproduced |
| Text reproducibility | | AAA | All text reproduced cleanly |
| | | AA | Some serifs and fine details not reproduced cleanly, but totally legible |
| | | A | Some broadening or blurring of text, but still totally legible |
| | | B | Broadening of text, with text of 8 pt or smaller being collapsed and illegible, or blurred and illegible |
| | | C | All text exhibits bleeding and collapse, or significant blurring |
| Rubbing resistance | | AA | No change in decorated portion after 15 back and forth repetitions of crockmeter |
| | | A | Decorated portion becomes fainter after between 11 and 14 back and forth repetitions of crockmeter |
| | | B | Decorated portion becomes fainter after between 4 and 10 back and forth repetitions of crockmeter |
| | | C | Decorated portion becomes fainter within 3 back and forth repetitions of crockmeter |
| Functionality | Aluminum powder sintered sound | A | Sound absorption coefficient of decorated article relative to frequency of 1,000 Hz of 0.75 or higher |

(continued)

| Item | | Evaluation | Criteria |
|---|---|---|---|
| | absorption plate | B | Sound absorption coefficient of decorated article relative to frequency of 1,000 Hz of at least 0.65 but less than 0.75 |
| | | C | Sound absorption coefficient of decorated article relative to frequency of 1,000 Hz of less than 0.65 |
| | Polyester fiber sound absorption board | A | Sound absorption coefficient of decorated article relative to frequency of 1,000 Hz of 0.75 or higher |
| | | B | Sound absorption coefficient of decorated article relative to frequency of 1,000 Hz of at least 0.65 but less than 0.75 |
| | | C | Sound absorption coefficient of decorated article relative to frequency of 1,000 Hz of less than 0.65 |
| | Glass fiber sound absorption sheet | A | Sound absorption coefficient of decorated article relative to frequency of 1,000 Hz of 0.55 or higher |
| | | B | Sound absorption coefficient of decorated article relative to frequency of 1,000 Hz of at least 0.45 but less than 0.55 |
| | | C | Sound absorption coefficient of decorated article relative to frequency of 1,000 Hz of less than 0.45 |
| | PVFM sponge | A | Absorption time when 0.04 g of water dripped onto decorated article of not more than 1 second |
| | | C | Absorption time when 0.04 g of water dripped onto decorated article of longer than 1 second |
| | Glass wool heat insulation material | A | Thermal conductivity of decorated article of 0.042 W/(m·K) or less |
| | | C | Thermal conductivity of decorated article greater than 0.042 W/(m·K) |

The results of the test examples are shown in Table 4-1 to Table 4-4. In terms of the printed images, for the test examples of Table 4-1 and Table 4-2, the color development and the rubbing resistance were evaluated, whereas for the test examples of Table 4-3 and Table 4-4, the fine lines, the text reproducibility and the rubbing resistance were evaluated.

Table 4-1 Test Examples (1)

| | Porous material | Surface treatment liquid | Amount of treatment liquid (g/m$^2$) | Amount of non-volatile liquid in treated article (g/m$^2$) | Aqueous ink | Amount of non-volatile liquid in decorative article (g/m$^2$) | Color development | Rubbing resistance | Functionality |
|---|---|---|---|---|---|---|---|---|---|
| Example 1 | | Treatment liquid 1 | 20 | 0.4 | Aqueous ink set 1 | 2.7 | AAA | AA | A |
| Example 2 | | Treatment liquid 1 | 30 | 0.6 | Aqueous ink set 4 | 0.6 | AAA | AA | A |
| Example 3 | | Treatment liquid 2 | 30 | 3.6 | Aqueous ink set 2 | 3.7 | AAA | AA | A |
| Example 4 | | Treatment liquid 11 | 400 | 8.0 | Aqueous ink set 1 | 10.3 | AAA | AA | A |
| Example 5 | | Treatment liquid 4 | 20 | 10.2 | Aqueous ink set 2 | 10.5 | AAA | AA | A |
| Example 6 | | Treatment liquid 1 | 35.2 | 0.7 | Aqueous ink set 3 | 6.0 | AAA | AA | A |
| Example 7 | | Treatment liquid 10 | 800 | 16.0 | Aqueous ink set 3 | 21.3 | AAA | A | A |
| Example 8 | | Treatment liquid 9 | 30 | 5.3 | Aqueous ink set 1 | 7.6 | AA | AA | A |
| Example 9 | NDC CALME | Treatment liquid 8 | 50 | 16.0 | Aqueous ink set 1 | 18.3 | AA | AA | A |
| Example 10 | | Treatment liquid 12 | 900 | 18.0 | Aqueous ink set 3 | 23.3 | AA | A | A |
| Example 11 | | Treatment liquid 3 | 90 | 30.6 | Aqueous ink set 1 | 32.9 | AA | A | A |
| Example 12 | | Treatment liquid 2 | 300 | 36.0 | Aqueous ink set 1 | 38.3 | AA | A | A |
| Example 13 | | Treatment liquid 8 | 118 | 20.1 | Aqueous ink set 3 | 25.4 | A | A | A |
| Example 14 | | Treatment liquid 5 | 55 | 28.6 | Aqueous ink set 1 | 30.9 | A | A | A |

|  | Porous material | Surface treatment liquid | Amount of treatment liquid (g/m$^2$) | Amount of non-volatile liquid in treated article (g/m$^2$) | Aqueous ink | Amount of non-volatile liquid in decorative article (g/m$^2$) | Color development | Rubbing resistance | Functionality |
|---|---|---|---|---|---|---|---|---|---|
| Example 15 | | Treatment liquid 8 | 150 | 43.5 | Aqueous ink set 3 | 48.8 | A | B | A |
| Example 16 | | Treatment liquid 1 | 7 | 0.1 | Aqueous ink set 2 | 0.2 | B | A | A |
| Example 17 | | Treatment liquid 13 | 75 | 0.0 | Aqueous ink set 3 | 5.3 | A | B | A |
| Example 18 | | Treatment liquid 1 | 145 | 2.9 | Aqueous ink set 1 | 5.2 | AAA | AA | A |
| Example 19 | | Treatment liquid 3 | 30 | 9.6 | Aqueous ink set 4 | 9.6 | AAA | AA | A |
| Example 20 | Acoustic Mute Board | Treatment liquid 2 | 65 | 7.8 | Aqueous ink set 3 | 13.1 | AAA | AA | A |
| Example 21 | | Treatment liquid 4 | 40 | 20.4 | Aqueous ink set 2 | 20.7 | AAA | A | A |
| Example 22 | | Treatment liquid 5 | 45 | 23.4 | Aqueous ink set 3 | 28.7 | A | A | A |

Table 4-2 Test Examples (2)

| | Porous material | Surface treatment liquid | Amount of treatment liquid (g/m$^2$) | Amount of non-volatile liquid in treated article (g/m$^2$) | Aqueous ink | Amount of non-volatile liquid in decorative article (g/m$^2$) | Color development | Rubbing resistance | Functionality |
|---|---|---|---|---|---|---|---|---|---|
| Example 23 | CARLTON | Treatment liquid 1 | 150 | 3.0 | Aqueous ink set 2 | 3.3 | AAA | AA | A |
| Example 24 | | Treatment liquid 2 | 30 | 3.6 | Aqueous ink set 3 | 8.9 | AAA | AA | A |
| Example 25 | | Treatment liquid 4 | 34 | 17.3 | Aqueous ink set 3 | 22.6 | AAA | A | A |
| Example 26 | BELCLEAN | Treatment liquid 1 | 30 | 0.6 | Aqueous ink set 1 | 2.9 | AAA | AA | A |
| Example 27 | | Treatment liquid 7 | 20 | 10.4 | Aqueous ink set 2 | 10.7 | AAA | AA | A |
| Example 28 | | Treatment liquid 3 | 74 | 23.7 | Aqueous ink set 1 | 26.0 | AAA | A | A |
| Example 29 | Paraboard EM | Treatment liquid 13 | 800 | 0.0 | Aqueous ink set 1 | 2.3 | AA | AA | A |
| Example 30 | | Treatment liquid 11 | 40 | 0.8 | Aqueous ink set 1 | 3.1 | AAA | AA | A |
| Example 31 | | Treatment liquid 14 | 80.3 | 9.6 | Aqueous ink set 1 | 11.9 | AAA | AA | A |
| Example 32 | | Treatment liquid 12 | 1000 | 30.0 | Aqueous ink set 1 | 32.3 | AA | A | A |

| | Porous material | Surface treatment liquid | Amount of treatment liquid (g/m²) | Amount of non-volatile liquid in treated article (g/m²) | Aqueous ink | Amount of non-volatile liquid in decorative article (g/m²) | Color development | Rubbing resistance | Functionality |
|---|---|---|---|---|---|---|---|---|---|
| Example 33 | NDC CALME | none | 0 | 0.0 | Aqueous ink set 4 | 0.0 | C | C | A |
| Example 34 | | Treatment liquid 13 | 30 | 0.0 | Aqueous ink set 4 | 0.0 | C | B | A |
| Example 35 | | Treatment liquid 3 | 300 | 102.0 | Aqueous ink set 1 | 104.3 | B | C | B |
| Example 36 | | Treatment liquid 3 | 800 | 272.0 | Aqueous ink set 2 | 272.3 | B | C | C |
| Example 37 | Acoustic Mute Board | Treatment liquid 13 | 1000 | 0.0 | Aqueous ink set 4 | 0.0 | C | B | A |
| Example 38 | | Treatment liquid 3 | 806.7 | 274.3 | Aqueous ink set 1 | 276.6 | B | C | C |
| Example 39 | CARLTON | Treatment liquid 13 | 200 | 0.0 | Aqueous ink set 4 | 0.0 | C | B | A |
| Example 40 | | Treatment liquid 5 | 200 | 104.0 | Aqueous ink set 1 | 106.3 | C | C | C |
| Example 41 | BELCLEAN | Treatment liquid 13 | 30 | 0.0 | Aqueous ink set 4 | 0.0 | B | B | C |
| Example 42 | | Treatment liquid 2 | 900 | 108.0 | Aqueous ink set 1 | 110.3 | B | C | C |
| Example 43 | Paraboard EM | Treatment liquid 13 | 1000 | 0.0 | Aqueous ink set 4 | 0.0 | C | B | A |
| Example 44 | | Treatment liquid 3 | 1000 | 340.0 | Aqueous ink set 1 | 342.3 | C | C | C |

Table 4-3 Test Examples (3)

| | Porous material | Surface treatment liquid | Amount of treatment liquid (g/m$^2$) | Amount of non-volatile liquid in treated article (g/m$^2$) | Aqueous ink | Amount of non-volatile liquid in decorative article (g/m$^2$) | Fine lines | Text reproducibility | Rubbing resistance | Functionality |
|---|---|---|---|---|---|---|---|---|---|---|
| Example 45 | NDC CALME | Treatment liquid 1 | 25 | 0.5 | Aqueous ink set 1 | 2.8 | AAA | AAA | AA | A |
| Example 46 | | Treatment liquid 4 | 28.5 | 14.5 | Aqueous ink set 2 | 14.8 | AAA | AAA | AA | A |
| Example 47 | | Treatment liquid 10 | 46 | 0.9 | Aqueous ink set 1 | 3.2 | AAA | AAA | AA | A |
| Example 48 | | Treatment liquid 14 | 34.9 | 4.2 | Aqueous ink set 1 | 6.5 | AAA | AAA | AA | A |
| Example 49 | | Treatment liquid 14 | 99.6 | 12.0 | Aqueous ink set 1 | 14.3 | AAA | AAA | AA | A |
| Example 50 | | Treatment liquid 2 | 252 | 30.2 | Aqueous ink set 1 | 32.5 | AAA | AAA | A | A |
| Example 51 | | Treatment liquid 6 | 125 | 21.3 | Aqueous ink set 3 | 26.6 | AA | AAA | A | A |
| Example 52 | | Treatment liquid 9 | 29.7 | 5.2 | Aqueous ink set 3 | 10.5 | AA | AA | AA | A |
| Example 53 | | Treatment liquid 1 | 10 | 0.2 | Aqueous ink set 4 | 0.2 | A | A | A | A |
| Example 54 | | Treatment liquid 5 | 90.3 | 47.0 | Aqueous ink set 1 | 49.3 | A | A | B | A |
| Example 55 | | Treatment liquid 13 | 35 | 0.0 | Aqueous ink set 1 | 2.3 | B | B | B | A |
| Example 56 | | Treatment liquid 8 | 135.3 | 39.2 | Aqueous ink set 3 | 44.5 | A | A | B | A |

| | Porous material | Surface treatment liquid | Amount of treatment liquid (g/m$^2$) | Amount of non-volatile liquid in treated article (g/m$^2$) | Aqueous ink | Amount of non-volatile liquid in decorative article (g/m$^2$) | Fine lines | Text reproducibility | Rubbing resistance | Functionality |
|---|---|---|---|---|---|---|---|---|---|---|
| Example 57 | | Treatment liquid 1 | 43.9 | 0.9 | Aqueous ink set 1 | 3.2 | AAA | AAA | AA | A |
| Example 58 | Acoustic Mute Board | Treatment liquid 2 | 37.2 | 4.5 | Aqueous ink set 1 | 9.8 | AAA | AAA | AA | A |
| Example 59 | | Treatment liquid 3 | 34.6 | 11.1 | Aqueous ink set 4 | 11.1 | AAA | AA | AA | A |
| Example 60 | | Treatment liquid 4 | 53.1 | 27.1 | Aqueous ink set 2 | 27.4 | AAA | AAA | A | A |

Table 4-4 Test Examples (4)

| | Porous material | Surface treatment liquid | Amount of treatment liquid (g/m$^2$) | Amount of non-volatile liquid in treated article (g/m$^2$) | Aqueous ink | Amount of non-volatile liquid in decorative article (g/m$^2$) | Fine lines | Text reproducibility | Rubbing resistance | Functionality |
|---|---|---|---|---|---|---|---|---|---|---|
| Example 61 | CARLTON | Treatment liquid 1 | 141 | 2.8 | Aqueous ink set 2 | 3.1 | AAA | AAA | AA | A |
| Example 62 | CARLTON | Treatment liquid 2 | 39.1 | 4.7 | Aqueous ink set 1 | 10.0 | AAA | AAA | AA | A |
| Example 63 | CARLTON | Treatment liquid 4 | 39.2 | 20.0 | Aqueous ink set 1 | 25.3 | AAA | AAA | A | A |
| Example 64 | BELCLEAN | Treatment liquid 1 | 48.2 | 1.0 | Aqueous ink set 1 | 3.3 | AAA | AAA | AA | A |
| Example 65 | BELCLEAN | Treatment liquid 7 | 20 | 10.4 | Aqueous ink set 2 | 10.7 | AAA | AAA | AA | A |
| Example 66 | BELCLEAN | Treatment liquid 3 | 73 | 23.4 | Aqueous ink set 1 | 25.7 | AAA | AAA | A | A |
| Example 67 | Paraboard EM | Treatment liquid 11 | 40 | 0.8 | Aqueous ink set 1 | 3.1 | AAA | AAA | AA | A |
| Example 68 | Paraboard EM | Treatment liquid 12 | 1000 | 30.0 | Aqueous ink set 1 | 32.3 | AA | AAA | A | A |
| Example 69 | Paraboard EM | Treatment liquid 5 | 78 | 40.6 | Aqueous ink set 3 | 45.9 | A | B | B | A |
| Example 70 | NDC CALME | Treatment liquid 3 | 300 | 102.0 | Aqueous ink set 1 | 104.3 | B | B | C | B |
| Example 71 | NDC CALME | Treatment liquid 3 | 800 | 272.0 | Aqueous ink set 2 | 272.3 | B | C | C | c |
| Example 72 | NDC CALME | Treatment liquid 5 | 653 | 339.6 | Aqueous ink set 2 | 339.9 | C | C | C | C |
| Example 73 | Acoustic Mute Board | Treatment liquid 3 | 900 | 306.0 | Aqueous ink set 1 | 308.3 | B | B | C | C |

| | Porous material | Surface treatment liquid | Amount of treatment liquid (g/m$^2$) | Amount of non-volatile liquid in treated article (g/m$^2$) | Aqueous ink | Amount of non-volatile liquid in decorative article (g/m$^2$) | Fine lines | Text reproducibility | Rubbing resistance | Functionality |
|---|---|---|---|---|---|---|---|---|---|---|
| Example 74 | CARLTON | Treatment liquid 4 | 189 | 96.4 | Aqueous ink set 1 | 98.7 | B | B | C | C |
| Example 75 | BELCLEAN | Treatment liquid 5 | 623 | 324.0 | Aqueous ink set 1 | 326.3 | C | C | C | C |
| Example 76 | Paraboard EM | Treatment liquid 3 | 1245 | 423.3 | Aqueous ink set 1 | 425.6 | B | B | C | C |

Test Examples 1 to 32 and Test Examples 45 to 69 in the above tables are examples of decorative articles containing the prescribed amount of non-volatile liquid, and in these test examples, images having excellent image quality and favorable rubbing resistance were able to be formed while maintaining the function of the porous material. Further, Test Examples 17, 29 and 55 represent examples in which the amount of non-volatile liquid in the treated article is zero, but because decoration was performed using an ink containing a non-volatile liquid, a decorative article having favorable color development and the like was able to be obtained in each case. On the other hand, Test Examples 2, 19, 53 and 59 represent examples in which an ink containing no non-volatile liquid was used, but because the treated article already contained a non-volatile liquid, a favorable decorative article was able to be obtained in each case.

The disclosure of this application is related to the subject matter disclosed in prior Japanese Application 2015-093301 filed on April 30, 2015, the entire contents of which are incorporated by reference herein.

It should be noted that, besides the embodiments already described above, various modifications and variations can be made in the above embodiments without departing from the novel and advantageous features of the present invention. Accordingly, it is intended that all such modifications and variations are included within the scope of the appended claims.

## Claims

1.  A decorative article comprising a printed image on a surface of a porous material having at least one function selected from among sound absorption, water absorption and heat insulation, and an amount of non-volatile liquid contained in the decorative article being at least 0.1 g/m$^2$ but not more than 55 g/m$^2$.

2.  The decorative article according to Claim 1, wherein the amount of non-volatile liquid is at least 0.3 g/m$^2$ but not more than 20 g/m$^2$.

3.  The decorative article according to Claim 1 or 2, further comprising a surface treatment layer beneath the printed image, wherein the non-volatile liquid is contained within one or both of the printed image and the surface treatment layer.

4.  A method for producing the decorative article according to any one of Claims 1 to 3, the method comprising:

    a step of forming the printed image using an aqueous ink containing water, a water-dispersible resin and/or a water-soluble resin, a colorant, and a non-volatile liquid in an amount of not more than 60% by mass relative to a total mass of the ink.

5.  The method for producing a decorative article according to Claim 4, further comprising, prior to the step of forming the printed image,
    a step of forming a surface treatment layer using a surface treatment liquid containing water, a colorant-fixing agent, and a non-volatile liquid in an amount of not more than 60% by mass relative to a total mass of the surface treatment liquid.

6.  The method for producing a decorative article according to Claim 4 or 5, wherein at least one of the aqueous ink and the surface treatment liquid comprises a water-soluble organic solvent having a surface tension of at least 30 mN/m.

7.  The method for producing a decorative article according to Claim 6, wherein the water-soluble organic solvent is the non-volatile liquid.

8.  A surface-treated article having a surface treatment layer on a surface of a porous material having at least one function selected from among sound absorption, water absorption and heat insulation, and an amount of non-volatile liquid contained in the surface-treated article being not more than 55 g/m$^2$.

9.  The surface-treated article according to Claim 8, wherein the amount of the non-volatile liquid is at least 0.3 g/m$^2$ but not more than 20 g/m$^2$.

10. A method for producing the surface-treated article according to Claim 8 or 9, the method comprising:

    a step of forming the surface treatment layer using a surface treatment liquid containing water, a colorant-fixing agent, and a non-volatile liquid in an amount of not more than 60% by mass relative to a total mass of the surface treatment liquid.

11. The method for producing a surface-treated article according to Claim 10, wherein the surface treatment liquid comprises a water-soluble organic solvent having a surface tension of at least 30 mN/m.

12. The method for producing a surface-treated article according to Claim 11, wherein the water-soluble organic solvent is the non-volatile liquid.

13. The method for producing a surface-treated article according to any one of Claims 10 to 12, wherein the colorant-fixing agent comprises at least one component selected from the group consisting of cationic water-dispersible resins, inorganic particles having a median size measured by a dynamic light-scattering method of less than 1 $\mu$m, and multivalent metal salts.

## INTERNATIONAL SEARCH REPORT

| International application No. |
| --- |
| PCT/JP2016/062914 |

A. CLASSIFICATION OF SUBJECT MATTER
*B41M5/00*(2006.01)i, *B41M5/50*(2006.01)i, *B41M5/52*(2006.01)i, *C09D11/30*
(2014.01)i, *G10K11/16*(2006.01)i, *G10K11/162*(2006.01)i, *E04B1/86*(2006.01)n

According to International Patent Classification (IPC) or to both national classification and IPC

B. FIELDS SEARCHED

Minimum documentation searched (classification system followed by classification symbols)
B41M5/00, B41M5/50, B41M5/52, C09D11/30, G10K11/16, G10K11/162, E04B1/86

Documentation searched other than minimum documentation to the extent that such documents are included in the fields searched
Jitsuyo Shinan Koho        1922–1996    Jitsuyo Shinan Toroku Koho    1996–2016
Kokai Jitsuyo Shinan Koho  1971–2016    Toroku Jitsuyo Shinan Koho    1994–2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2009-125940 A  (Fujifilm Corp.),<br>11 June 2009 (11.06.2009),<br>paragraphs [0147] to [0189]<br>& US 2009/0128611 A1<br>paragraphs [0211] to [0315] | 1-13 |
| X | JP 2004-299386 A  (Ricoh Co., Ltd.),<br>28 October 2004 (28.10.2004),<br>paragraphs [0147] to [0191]<br>& US 2006/0061643 A1<br>paragraphs [0246] to [0293]<br>& WO 2004/082954 A1    & EP 1610955 A<br>& KR 10-2005-0113239 A  & CN 1791516 A | 1-13 |

[X]  Further documents are listed in the continuation of Box C.    [ ]  See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>08 July 2016 (08.07.16) | Date of mailing of the international search report<br>19 July 2016 (19.07.16) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |

Form PCT/ISA/210 (second sheet) (January 2015)

**INTERNATIONAL SEARCH REPORT**

International application No.

PCT/JP2016/062914

C (Continuation).   DOCUMENTS CONSIDERED TO BE RELEVANT

| Category* | Citation of document, with indication, where appropriate, of the relevant passages | Relevant to claim No. |
|---|---|---|
| X | JP 8-142500 A (Canon Inc.), 04 June 1996 (04.06.1996), paragraphs [0018], [0035], [0043] to [0064] (Family: none) | 1-13 |
| X | JP 2015-20340 A (Canon Inc.), 02 February 2015 (02.02.2015), paragraphs [0022], [0034] to [0048] (Family: none) | 1-13 |
| A | JP 2004-291549 A (Kanebo, Ltd.), 21 October 2004 (21.10.2004), paragraphs [0020] to [0023] (Family: none) | 1-13 |
| A | JP 2013-114137 A (Nitto Denko Corp.), 10 June 2013 (10.06.2013), paragraphs [0148] to [0150] & WO 2013/081039 A1   & TW 201329121 A | 1-13 |
| A | JP 2008-285969 A (Panasonic Electric Works Co., Ltd.), 27 November 2008 (27.11.2008), entire text (Family: none) | 1-13 |
| A | JP 2005-55845 A (Katsuhiko KUWABATA), 03 March 2005 (03.03.2005), paragraphs [0038] to [0061] (Family: none) | 1-13 |

Form PCT/ISA/210 (continuation of second sheet) (January 2015)

**REFERENCES CITED IN THE DESCRIPTION**

**Patent documents cited in the description**

- JP 2008285969 A
- JP 2015093301 A